(19) Europäisches Patentamt / European Patent Office / Office européen des brevets

(11) **EP 3 995 722 B1**

(12) **EUROPEAN PATENT SPECIFICATION**

(45) Date of publication and mention of the grant of the patent:
**17.05.2023 Bulletin 2023/20**

(21) Application number: **21206392.9**

(22) Date of filing: **04.11.2021**

(51) International Patent Classification (IPC):
**F16H 63/38** $^{(2006.01)}$     **F16H 61/32** $^{(2006.01)}$
**F16H 61/28** $^{(2006.01)}$

(52) Cooperative Patent Classification (CPC):
**F16H 63/38; F16H 61/2807; F16H 61/32;**
F16H 2061/326

(54) **SHIFT-BY-WIRE SYSTEM**

SHIFT-BY-WIRE-SYSTEM

SYSTÈME À COMMANDE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2020 JP 2020186195**

(43) Date of publication of application:
**11.05.2022 Bulletin 2022/19**

(73) Proprietors:
• **TOYOTA JIDOSHA KABUSHIKI KAISHA**
  **Toyota-shi, Aichi-ken, 471-8571 (JP)**
• **AISIN CORPORATION**
  **Kariya, Aichi 448-8650 (JP)**

(72) Inventors:
• **ISHIURA, Kazuaki**
  **Toyota-shi, 471-8571 (JP)**
• **KITAHATA, Takeshi**
  **Toyota-shi, 471-8571 (JP)**
• **SHIBATA, Hiroshi**
  **Toyota-shi, 471-8571 (JP)**
• **ICHIOKA, Eiji**
  **Toyota-shi, 471-8571 (JP)**
• **OGINO, Atsuto**
  **Kariya, 448-8650 (JP)**
• **UCHIDA, Yutaka**
  **Kariya, 448-8650 (JP)**
• **ISHIKAWA, Kota**
  **Kariya, 448-8650 (JP)**

(74) Representative: **D Young & Co LLP**
  **120 Holborn**
  **London EC1N 2DY (GB)**

(56) References cited:
WO-A1-2020/080455     JP-A- 2004 190 839
US-A1- 2017 307 072     US-B2- 10 680 541

**Description**

BACKGROUND OF THE INVENTION

1. Field of the Invention

The present invention relates to a shift-by-wire system including a gear device configured to transmit a torque output from a rotating electrical machine to a detent plate.

2. Description of Related Art

There is known a shift-by-wire system configured to switch a shift position by transmitting a torque output from a rotating electrical machine to a detent plate via a gear pair that is a gear device. Examples of the shift-by-wire system include a shift-by-wire system described in Japanese Unexamined Patent Application Publication No. 2018-80807 (JP 2018-80807 A).
US 2017/307072 A1 discusses a control circuit switches over a shift range by controlling driving of a motor to rotationally drive a detent plate. A current detection circuit detects a current value corresponding to a driving current supplied to drive the motor. A current increase check part performs check processing to check whether the current value detected by the current detection circuit has increased. A motor rotation stop part stops rotation of the motor when the current increase check part determines that the current has increased. A reverse driving part reverses the rotation direction of the motor and rotationally drives the motor after stopping of the motor by the motor rotation stop part.
US 10,680,541 B2 discusses a shift range control apparatus includes: an idling determination portion that determines, based on a motor angle and an output shaft angle, an end of an idling state in which a motor is rotating within a range of a play, the motor angle being a value based on a detected value of a motor rotation angle sensor that detects the rotation of the motor, the output shaft angle being a value based on a detected value of an output shaft sensor that detects rotation of the output shaft; and a target value setting portion that sets a motor angle target value for drive control of the motor using a corrected angle value that is a value corresponding to the motor angle at an end of an idling.
JP 2004/190839 A discusses a position switching control device.
WO 2020/080544 A1 discusses a shift range control device.
However, none of these documents disclose at least the following features of accompanying claim 1: wherein, the electronic control unit (30) is configured to reverse the rotating electrical machine torque after the electronic control unit (30) makes the rotating electrical machine (32) output the rotating electrical machine torque for turning the detent plate (46) in a turning direction to switch the shift position, then the detent torque generated in the detent plate (46) by a push of the engagement portion (58) is reversed in the turning direction from a torque in a counter-turning direction to a torque in the turning direction being opposite to the torque in the counter-turning direction, and before backlash elimination on a side corresponding to the counter-turning direction in a backlash portion of the gear device (76) by the reversed detent torque is finished.

SUMMARY OF THE INVENTION

The invention is defined by the accompanying claims.
In the shift-by-wire system described in JP 2018-80807 A, when a detent torque generated in a detent plate by a detent spring is reversed into a torque in a turning direction of the detent plate from a torque in a counter-turning direction opposite to the turning direction in a case where a shift position is switched, a backlash-eliminated state of a gear device is reversed to cause a problem that gear rattling noise (for example, hitting noise of teeth of a gear pair) occurs.
The present invention relates to a shift-by-wire system capable of reducing gear rattling noise in a gear device when a shift position is switched.
According to the present invention, the aforementioned problem is solved by a shift-by-wire system according to claim 1. Thus, the backlash elimination on a side corresponding to the counter-turning direction is started in the backlash portion by the reversed rotating electrical machine torque before the backlash elimination on the side corresponding to the counter-turning direction is finished in the backlash portion by the reversed detent torque. As described above, the backlash elimination on the side corresponding to the counter-turning direction is executed in the backlash portion by the reversed rotating electrical machine torque, thereby reducing a necessary backlash elimination amount that is a size of a backlash necessary for the backlash elimination on the side corresponding to the counter-turning direction in the backlash portion by the reversed detent torque as compared to a case where the backlash elimination on the side corresponding to the counter-turning direction is not executed in the backlash portion by the reversed rotating electrical machine torque. Thus, the gear rattling noise can be reduced in the backlash portion because of reduction of a period in which the speed of a gear arranged on a side close to the detent plate in the backlash portion is increased by the reversed detent torque.
In the shift-by-wire system of the aspect described above, the electronic control unit may be configured to finish the backlash elimination in the backlash portion by the reversed rotating electrical machine torque before the backlash elimination on a side corresponding to the counter-turning direction is started in the backlash portion by the reversed detent torque.
The backlash elimination on the side corresponding to the counter-turning direction has already been finished in the backlash portion by the reversed rotating electrical machine torque even though the backlash elimination on the side corresponding to the counter-turning direction will be executed by the reversed detent torque. Therefore, the necessary backlash elimination amount using the reversed detent torque is 0. Thus, the gear rattling noise can be reduced in the backlash portion because there is no period in which the speed of the gear arranged on the side close to the detent plate in the backlash portion is increased by the reversed detent torque.

In the shift-by-wire system of the aspect described above, the electronic control unit may be configured to reverse the rotating electrical machine torque immediately after the detent torque is reversed from the torque in the counter-turning direction to the torque in the turning direction.

Since the rotating electrical machine torque is reversed immediately after the detent torque is reversed, it is possible to reduce an amount of a decrease in an angular velocity in the turning direction of the detent plate due to the reversal of the rotating electrical machine torque, thereby suppressing an increase in time required to switch the shift positions.

In the shift-by-wire system of the aspect described above, the electronic control unit may be configured to reverse the rotating electrical machine torque based on a turning angle of the detent plate.

Since the detent torque changes depending on the turning angle of the detent plate, the timing to reverse the rotating electrical machine torque can accurately be controlled by reversing the rotating electrical machine torque based on the turning angle of the detent plate.

In the shift-by-wire system having the configuration described above, the electronic control unit may be configured to estimate the turning angle of the detent plate from a rotation angle of the rotating electrical machine.

Costs of the shift-by-wire system can be reduced because there is no need to provide a sensor configured to detect the turning angle of the detent plate.

In the shift-by-wire system of the aspect described above, the electronic control unit may be configured to reduce the rotating electrical machine torque immediately before the backlash elimination on a side corresponding to the counter-turning direction is finished in the gear device within a period in which the backlash elimination is executed.

Since the rotating electrical machine torque is reduced immediately before the backlash elimination is finished, that is, immediately before one gear hits the other gear in the gear device, the gear rattling noise can be reduced as compared to a case where the rotating electrical machine torque is not reduced immediately before the backlash elimination is finished.

In the shift-by-wire system of the aspect described above, the electronic control unit may be configured not to reduce the rotating electrical machine torque immediately before the backlash elimination is finished in the gear device within a period in which the backlash elimination is executed.

According to the shift-by-wire system having the configuration described above, the electronic control unit is configured to estimate the detent torque based on the rotating electrical machine torque and the angular velocity change rate of the rotating electrical machine during the switching control for the shift position, and correct the control timing to reverse the rotating electrical machine torque based on the estimated detent torque. For example, an actual detent torque is influenced by manufacturing variations of the gear device and manufacturing variations of the recesses of the detent plate. Since the detent torque is estimated based on the actual rotating electrical machine torque and the actual angular velocity change rate of the rotating electrical machine and the control timing to reverse the rotating electrical machine torque is corrected, the control timing to reverse the rotating electrical machine torque can be set earlier than that in a case where the control timing is set later in consideration of the influence of the manufacturing variations. Therefore, the backlash elimination is promptly executed in the backlash portion of the gear device by the reversed rotating electrical machine torque. Thus, the gear rattling noise is reduced easily.

In the shift-by-wire system having the configuration described above, the electronic control unit may be configured to correct the control timing after the switching control for the shift positions is finished, in which the detent torque is estimated.

The signal-to-noise (SN) ratio is low in the calculation of the angular velocity change rate of the rotating electrical machine. Therefore, the angular velocity change rate is preferably calculated through a filter. However, the calculation through the filter causes a delay. Even though the correction of the control timing is attempted with the detent torque calculated, that is, estimated during the switching control for the shift positions, an appropriate control timing may be lost due to the delay in the calculation of the angular velocity change rate of the rotating electrical machine. By correcting the control timing after the switching control for the shift positions is finished with the detent torque estimated, for example, a non-causal zero-phase filter that does not cause a calculation delay can be used in the calculation of the angular velocity change rate. Thus, the detent torque can be estimated accurately.

In the shift-by-wire system of the aspect described above, the gear device may include multistage gear pairs. The backlash portion may be in a gear pair located closest to the rotating electrical machine on a power transmission path of the gear device, out of the multistage gear pairs.

In the case where the gear device includes the multistage gear pairs, gear pairs in the multistage gear pairs include backlash portions, respectively. In the backlash elimination in the backlash portions of the multistage gear pairs by the reversed detent torque, the speeds of gears on the power transmission path of the gear device are increased in sequence from the detent plate to the rotating electrical machine. Therefore, the gear rattling noise is likely to increase in the backlash portion of the gear pair located closest to the rotating electrical machine on the power transmission path of the gear device. The backlash elimination is started by the reversed rotating electrical machine torque in the backlash portion of the gear pair located closest to the rotating electrical machine before the finish of the backlash elimination by the reversed detent torque. Thus, the gear rattling noise can be reduced in the backlash portion of the gear device that is located closest to the rotating electrical machine.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is an explanatory drawing of a main part of control functions for various types of control in a vehicle including a shift-by-wire system according to an embodiment of the present invention;
FIG. 2 is a perspective view of a part of a parking lock device configured to fix the shift-by-wire system and a driving wheel in a non-rotatable manner;
FIG. 3 is an explanatory drawing of a positional relationship between an engagement roller and a detent plate of a shift switching mechanism illustrated in FIG. 1 when the detent plate is turned;
FIG. 4 illustrates an example of a servomechanism for controlling switching of a turning position of the detent plate when a shift position of the vehicle is switched;
FIG. 5 illustrates an example of a detent torque profile showing a predetermined relationship between a detent turning angle and a detent torque of the detent plate;
FIG. 6A is an explanatory drawing of a state of a backlash portion in a speed reducing gear device of the shift switching mechanism illustrated in FIG. 1 taking a first backlash portion as an example, illustrating a backlash-eliminated state on a side corresponding to a turning direction of the detent plate;
FIG. 6B is an explanatory drawing similar to that of FIG. 6A, illustrating a backlash-eliminated state on a side corresponding to a counter-turning direction of the detent plate;
FIG. 7 is an exemplary flowchart illustrating control operations of a shift-by-wire electronic control unit (SBW-ECU) that secures quietness by reducing gear rattling noise when the shift position of the vehicle is switched from a non-P shift position to a P shift position;
FIG. 8A is an exemplary time chart in a case where the operations in the flowchart of FIG. 7 are executed, which is a graph illustrating transition of a motor rotation angle relative to an elapse of time;
FIG. 8B is an exemplary time chart in the case where the operations in the flowchart of FIG. 7 are executed, which is a graph illustrating transition of a motor torque relative to an elapse of time;
FIG. 8C is an exemplary time chart in the case where the operations in the flowchart of FIG. 7 are executed, which is a graph illustrating transition of a motor angular velocity command value and a motor angular velocity relative to an elapse of time;
FIG. 8D is an exemplary time chart in the case where the operations in the flowchart of FIG. 7 are executed, which is a graph illustrating transition of backlash portion phase differences relative to an elapse of time;
FIG. 8E is an exemplary time chart in the case where the operations in the flowchart of FIG. 7 are executed, which is a graph illustrating transition of relative angular velocities relative to an elapse of time;
FIG. 9A is an exemplary time chart of a comparative example to the embodiment, which is a graph illustrating transition of a motor rotation angle relative to an elapse of time;
FIG. 9B is an exemplary time chart of the comparative example to the embodiment, which is a graph illustrating transition of a motor torque relative to an elapse of time;
FIG. 9C is an exemplary time chart of the comparative example to the embodiment, which is a graph illustrating transition of a motor angular velocity command value and a motor angular velocity relative to an elapse of time;
FIG. 9D is an exemplary time chart of the comparative example to the embodiment, which is a graph illustrating transition of a backlash portion phase difference relative to an elapse of time; and
FIG. 9E is an exemplary time chart of the comparative example to the embodiment, which is a graph illustrating transition of a relative angular velocity relative to an elapse of time.

DETAILED DESCRIPTION OF EMBODIMENTS

A term "turn" herein refers to "rotation" in a case where the range of a rotation angle is limited. The terms "turn" and "rotation" have substantially the same meanings.
An embodiment of the present invention is described below in detail with reference to the drawings. In the following embodiment, the drawings are simplified or modified as appropriate, and dimensional ratios and shapes of individual parts are not necessarily accurate.

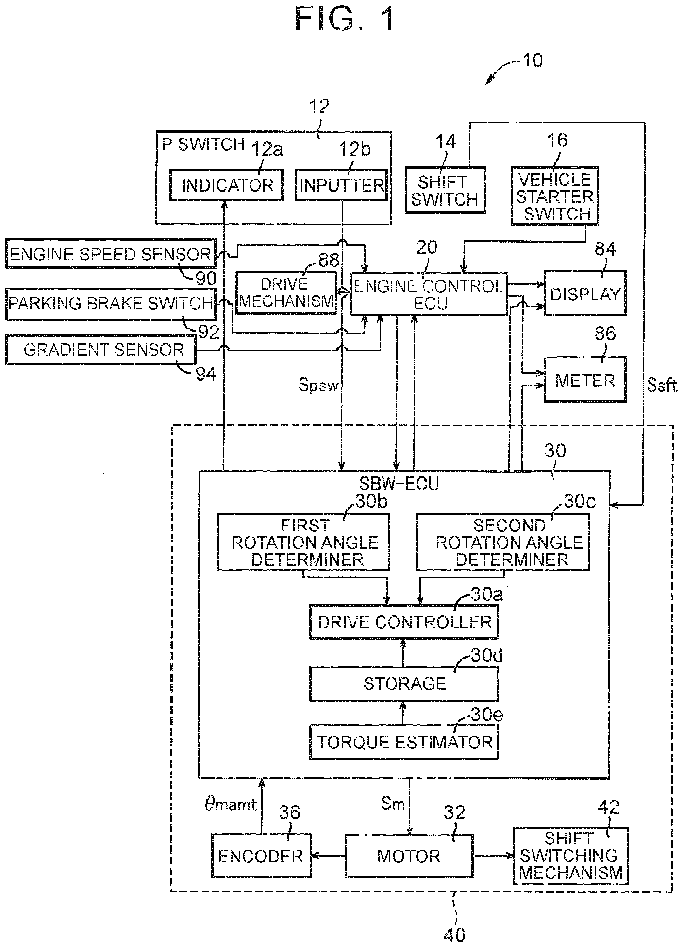

FIG. 1 is an explanatory drawing of a main part of control functions for various types of control in a vehicle 10 including a shift-by-wire system 40 according to the embodiment of the present invention.

The vehicle 10 includes a parking switch (also called as P switch) 12, a shift switch 14, a vehicle starter switch 16, an engine control electronic control unit (ECU) 20, a shift-by-wire (SBW) ECU 30, a motor 32, an encoder 36, a shift switching mechanism 42, a display 84, a meter 86, a drive mechanism 88 including an engine, an engine speed sensor 90, a parking brake switch 92, and a gradient sensor 94. The SBW-ECU 30, the motor 32, the encoder 36, and the shift switching mechanism 42 constitute the shift-by-wire system 40.

The parking switch 12 is used for switching a traveling mode between a parking mode (hereinafter referred to as "P mode") and a "non-parking mode" (hereinafter referred to as "non-P mode") other than the P mode. The parking switch 12 is provided as a separate switch near the shift switch 14. Examples of the "non-P mode" include a reverse mode (R mode) that is a reverse traveling mode, a neutral mode (N mode) that achieves a neutral state, and a drive mode (D mode) that is a forward traveling mode for automatic gear shifting control using all forward gear stages. The parking switch 12 includes an indicator 12a and an inputter 12b. For example, a driver operates the inputter 12b to switch the traveling mode from the non-P mode to the P mode. Examples of the inputter 12b include a momentary switch. A P command signal Spsw indicating a driver's instruction input to the inputter 12b is output to the SBW-ECU 30. The indicator 12a indicates a current shift position of the shift switching mechanism 42 described later based on a signal input from the SBW-ECU 30.

The shift switch 14 is an operation switch for selecting, for example, the reverse mode (R mode), the neutral mode (N mode), or the drive mode (D mode). A shift signal Ssft indicating a driver's instruction input to the shift switch 14 is output to the SBW-ECU 30.

The vehicle starter switch 16 is used for switching ON or OFF a vehicle starter. Examples of the vehicle starter switch 16 include an ignition switch. A signal indicating a driver's instruction input to the vehicle starter switch 16 is input to the engine control ECU 20.

The engine control ECU 20 includes a so-called microcomputer including, for example, a central processing unit (CPU), a random-access memory (RAM), a read-only memory (ROM), and an input/output interface. The CPU executes various types of control on the drive mechanism 88 of the vehicle 10 by processing signals based on programs prestored in the ROM while using a temporary storage function of the RAM.

The SBW-ECU 30 includes a so-called microcomputer similarly to the engine control ECU 20. The SBW-ECU 30 is an example of "electronic control unit" of the present invention. The SBW-ECU 30 controls the shift switching mechanism 42 via the motor 32. The SBW-ECU 30 controls switching of the traveling mode of the drive mechanism 88 via the engine control ECU 20 based on the shift signal Ssft input from the shift switch 14.

Examples of the motor 32 include a stepper motor to be driven under control using a motor control signal Sm output from the SBW-ECU 30. The motor 32 is an example of "rotating electrical machine" of the present invention.

The encoder 36 detects a motor rotation angle amount $\theta$mamt [rad] that is a rotation angle amount of actual rotation of a motor shaft 34 of the motor 32. The SBW-ECU 30 executes feedback control for driving the motor 32 by acquiring a signal indicating the motor rotation angle amount $\theta$mamt output from the encoder 36.

The shift switching mechanism 42 switches the shift position between a P shift position "P" to be switched when the P mode is selected and a non-P shift position "NotP" to be switched when the non-P mode is selected.

For example, the display 84 displays an instruction or an alert for the driver that is output from the engine control ECU 20 and/or the SBW-ECU 30. The meter 86 notifies the driver about a current shift position together with, for example, conditions of devices of the vehicle 10. For example, the drive mechanism 88 includes a known continuously variable transmission or a known stepped transmission.

The engine speed sensor 90 detects a rotation speed of the engine (for example, an internal combustion engine) mounted on the vehicle 10. The engine speed sensor 90 outputs a signal indicating a detected engine speed Ne [rpm] to the engine control ECU 20.

The parking brake switch 92 detects a state (operating or non-operating state) of a parking brake (not illustrated) configured to hold the position of the parked or stopped vehicle 10, and outputs a signal indicating the detected state of the parking brake to the engine control ECU 20.

The gradient sensor 94 detects a gradient of a road where the vehicle 10 is stopped or traveling. Examples of the gradient sensor 94 include an acceleration sensor. The gradient sensor 94 outputs a signal indicating the detected road gradient to the engine control ECU 20.

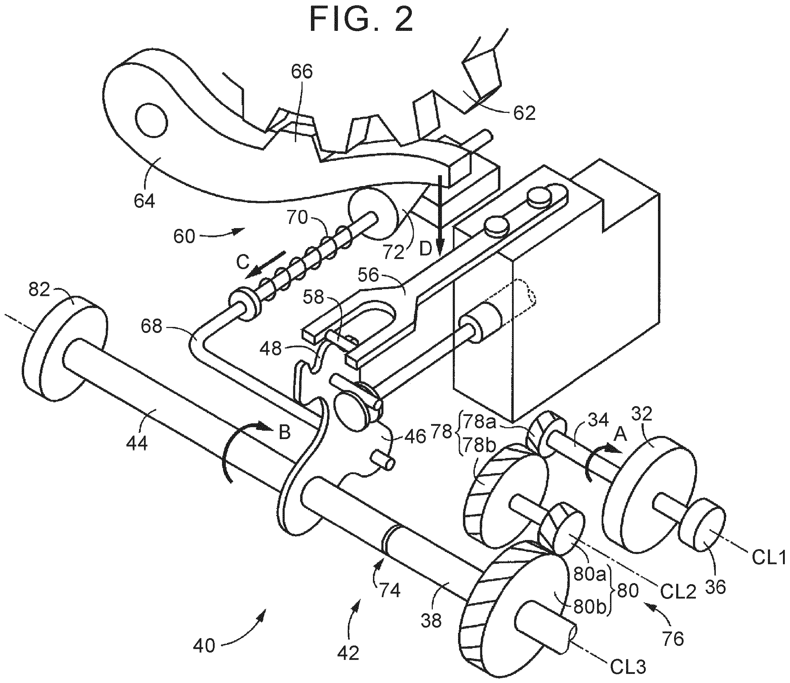

FIG. 2 is a perspective view of a part of a parking lock device 60 configured to fix the shift-by-wire system 40 and a driving wheel (not illustrated) in a non-rotatable manner. As described above, the shift-by-wire system 40 includes the motor 32, the encoder 36, the shift switching mechanism 42, and the SBW-ECU 30. The motor 32 serving as an actuator is driven under control of the SBW-ECU 30 to actuate the shift switching mechanism 42, thereby switching the shift position.

The shift switching mechanism 42 includes a speed reducing gear device 76, a manual shaft 44, a detent plate 46, and a flat spring 56.

The detent plate 46 is fixed to the manual shaft 44 by swaging or press fitting so as not to be rotatable relative to the manual shaft 44. The detent plate 46 and the manual shaft 44 are turnable about a turn axis CL3, and turn together so as not to be rotatable relative to each other. The manual shaft 44 includes an encoder 82. The encoder 82 turns together with the manual shaft 44 to detect a detent turning angle amount $\theta$damt [rad]

that is a turning angle amount of actual turn of the manual shaft 44 and the detent plate 46.

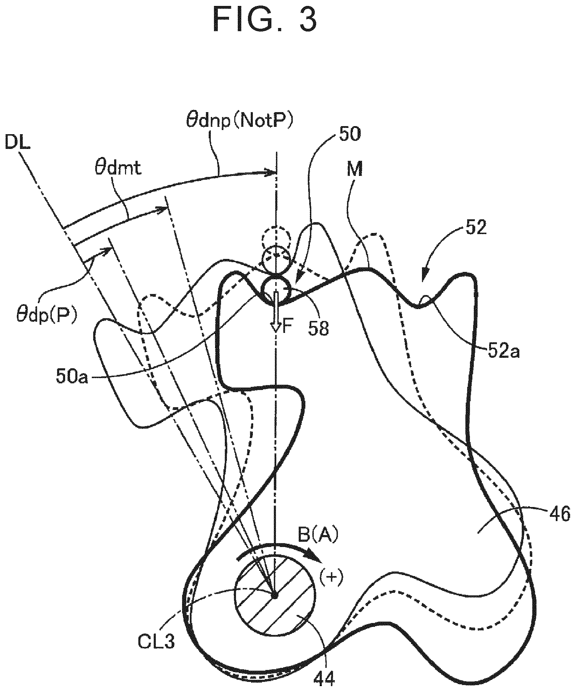

An upper outer peripheral edge of the detent plate 46 includes a wavy uneven surface 48. The uneven surface 48 includes a non-P valley 50 (see FIG. 3) and a P valley 52 (see FIG. 3). In the non-P valley 50, the detent plate 46 is positioned at a turning position corresponding to the non-P shift position "NotP". In the P valley 52, the detent plate 46 is positioned at a turning position corresponding to the P shift position "P". The non-P valley 50 and the P valley 52 are examples of "recess" of the present invention.

An engagement roller 58 at the distal end of the flat spring 56 including a fixed proximal end is in contact with the uneven surface 48. The engagement roller 58 is supported so as to be turnable relative to the proximal end of the flat spring 56. The flat spring 56 and the engagement roller 58 are examples of "detent spring" and "engagement portion" of the present invention, respectively. The flat spring 56 pushes the engagement roller 58 toward the uneven surface 48 with a predetermined pushing force F [N] (see FIG. 3). The engagement roller 58 pushes the uneven surface 48 with the predetermined pushing force F, and urges the detent plate 46 so that the position of contact with the uneven surface 48 moves toward a position in any valley of the uneven surface 48. The turning position of the detent plate 46 is determined by the engagement roller 58 entering the non-P valley 50 or the P valley 52 of the uneven surface 48 of the detent plate 46.

The speed reducing gear device 76 can transmit power between the motor 32 and the manual shaft 44. The speed reducing gear device 76 includes double-stage gear pairs including a first-stage gear pair 78 and a second-stage gear pair 80, and an output shaft 38. The speed reducing gear device 76 is an example of "gear device" of the present invention. The first-stage gear pair 78 and the second-stage gear pair 80 are examples of "multistage gear pairs" of the present invention.

The first-stage gear pair 78 includes a first gear 78a and a second gear 78b meshing with each other. A gear ratio ρ1 of the first-stage gear pair 78 (= number of teeth of second gear 78b / number of teeth of first gear 78a) is larger than 1. The second-stage gear pair 80 includes a third gear 80a and a fourth gear 80b meshing with each other. A gear ratio ρ2 of the second-stage gear pair 80 (= number of teeth of fourth gear 80b / number of teeth of third gear 80a) is larger than 1. An overall gear ratio ρ of the speed reducing gear device 76 (= ρ1 × ρ2) is larger than 1.

The motor shaft 34 is a rotation shaft of the motor 32 including a rotation axis CL1 as a rotation center. The first gear 78a is fixed to the motor shaft 34 so as not to be rotatable relative to the motor shaft 34. The second gear 78b and the third gear 80a are fixed to a rotation shaft including a rotation axis CL2 as a common rotation center. The output shaft 38 is a rotation shaft turnable about the turn axis CL3 in common with the manual shaft 44. The output shaft 38 and the manual shaft 44 are coupled by spline fitting at a spline fitting portion 74 so as not to be rotatable relative to each other. The fourth gear 80b is fixed to the output shaft 38 so as not to be rotatable relative to the output shaft 38. Examples of the first gear 78a, the second gear 78b, the third gear 80a, and the fourth gear 80b include bevel gears that increase meshing rates of the first-stage gear pair 78 and the second-stage gear pair 80, thereby achieving quiet power transmission and small torque fluctuation.

A motor torque Tm [Nm] output from the motor 32 is transmitted to the detent plate 46 by passing sequentially through the motor shaft 34, the first-stage gear pair 78, the second-stage gear pair 80, the output shaft 38, and the manual shaft 44. The motor torque Tm is an example of "rotating electrical machine torque" of the present invention.

The parking lock device 60 includes a parking gear 62, a parking lock pawl 64, a parking rod 68, and a spring 70. The parking gear 62 is coupled to the driving wheel. The parking lock pawl 64 is movable closer to or away from the parking gear 62 by turning about an axis. The parking lock pawl 64 includes a locking lug 66 meshable with the parking gear 62 when moving closer to the parking gear 62. By meshing the locking lug 66 with the parking gear 62, the driving wheel is fixed in a non-rotatable manner. A tapered member 72 engaging with the parking lock pawl 64 is inserted into and supported by one end of the parking rod 68. The other end of the parking rod 68 is coupled to the lower end of the detent plate 46. The tapered member 72 moves toward its small-diameter or largediameter side by turning the detent plate 46 and moving the parking rod 68. The spring 70 urges the tapered member 72 toward its small-diameter side.

FIG. 2 illustrates a state in which the detent plate 46 is at the turning position corresponding to the P shift position "P". In this state, the locking lug 66 of the parking lock pawl 64 meshes with the parking gear 62 to prevent rotation of the driving wheel coupled to the parking gear 62. When the motor 32 rotates in an arrow A direction in this state, the manual shaft 44 turns in an arrow B direction, and the one end of the parking rod 68 moves in an arrow C direction to move the tapered member 72 at its distal end. Therefore, the parking lock pawl 64 moves in an arrow D direction. By moving the parking lock pawl 64 in the arrow D direction, the locking lug 66 moves to a position where the locking lug 66 is unmeshed from the parking gear 62, thereby unlocking the driving wheel coupled to the parking gear 62.

FIG. 3 is an explanatory drawing of a positional relationship between the turned detent plate 46 and the engagement roller 58. FIG. 3 illustrates the detent plate 46 and the engagement roller 58 viewed in a direction of the turn axis CL3. A wide continuous line, a dashed line, and a narrow continuous line indicate cases where the engagement roller 58 pushes a non-P valley point 50a, a peak point M, and a P valley point 52a, respectively.

The non-P valley point 50a and the P valley point 52a are roots of the non-P valley 50 and the P valley 52 that the engagement roller 58 enters, respectively. When the engagement roller 58 pushes the non-P valley point 50a or the P valley point 52a of the detent plate 46, an absolute value of a detent torque Td [Nm] described later is minimum. The peak point M is a vertex of a projecting portion between the non-P valley 50 and the P valley 52 on the uneven surface 48. When the engagement roller 58 pushes the peak point M of the detent plate 46, the detent torque Td described later is 0. That is, when the engagement roller 58 pushes the peak point M of the detent plate 46, the predetermined pushing force F of the engagement roller 58 on the uneven surface 48 is directed to the turn axis CL3.

A detent turning angle $\theta d$ [rad] is a turning angle (turning position) of the detent plate 46. For example, the detent turning angle $\theta d$ is an angle between a reference line DL and a straight line connecting the non-P valley point 50a of the detent plate 46 and the turn axis CL3 that is a turning center. The reference line DL is preset to determine the detent turning angle $\theta d$. When the straight line connecting the non-P valley point 50a of the detent plate 46 and the turn axis CL3 that is the turning center coincides with the reference line DL, the detent turning angle $\theta d$ is 0. When the detent plate 46 turns in the arrow B direction, the detent turning angle $\theta d$ increases. When the detent plate 46 turns in a direction opposite to the arrow B direction, the detent turning angle $\theta d$ decreases. As illustrated in FIG. 3, detent turning angles $\theta d$ when the engagement roller 58 pushes the non-P valley point 50a, the peak point M, and the P valley point 52a are an angle $\theta dnp$, an angle $\theta dmt$, and an angle $\theta dp$, respectively. The angle $\theta dnp$ indicates a turning position of the detent plate 46 when the engagement roller 58 pushes the non-P valley point 50a corresponding to the non-P shift position "NotP". The angle $\theta dp$ indicates a turning position of the detent plate 46 when the engagement roller 58 pushes the P valley point 52a corresponding to the P shift position "P". The angle $\theta dp$ is smaller than the angle $\theta dnp$. The angle $\theta dmt$ is a value between the angle $\theta dnp$ and the angle $\theta dp$.

A motor rotation angle $\theta m$ [rad] is a rotation angle (rotational position) of the motor 32. For example, the motor rotation angle $\theta m$ is a rotation angle of the motor 32 relative to a reference line for the motor 32 (not illustrated) similarly to the detent turning angle $\theta d$. The reference line for the motor 32 is preset to determine the motor rotation angle $\theta m$. When the rotational position of the motor shaft 34 of the motor 32 coincides with the reference line for the motor 32, the motor rotation angle $\theta m$ is 0. When the detent turning angle $\theta d$ is 0, the motor rotation angle $\theta m$ is 0. When the detent turning angle $\theta d$ is the angle $\theta dnp$, the motor rotation angle $\theta m$ is an angle $\theta mnp$. When the detent turning angle $\theta d$ is the angle $\theta dp$, the motor rotation angle $\theta m$ is an angle $\theta mp$. When the motor 32 rotates in the arrow A direction, the motor rotation angle $\theta m$ increases, and when the motor 32 rotates in a direction opposite to the arrow A direction, the motor

rotation angle $\theta m$ decreases (see FIG. 2). In this embodiment, the direction in which the motor rotation angle $\theta m$ increases (arrow A direction) is identical to the direction in which the detent turning angle $\theta d$ increases (arrow B direction), and the direction in which the motor rotation angle $\theta m$ decreases (direction opposite to the arrow A direction) is identical to the direction in which the detent turning angle $\theta d$ decreases (direction opposite to the arrow B direction).

The detent torque Td [Nm] is defined as a "torque for turning the detent plate 46 about the turn axis CL3 with the pushing force F of the flat spring 56 for pushing the engagement roller 58 toward the uneven surface 48". When the engagement roller 58 pushes a portion on the non-P valley 50 side with respect to the peak point M, the detent torque Td acts to position the detent plate 46 at the turning position corresponding to the non-P shift position "NotP". When the engagement roller 58 pushes a portion on the P valley 52 side with respect to the peak point M, the detent torque Td acts to position the detent plate 46 at the turning position corresponding to the P shift position "P".

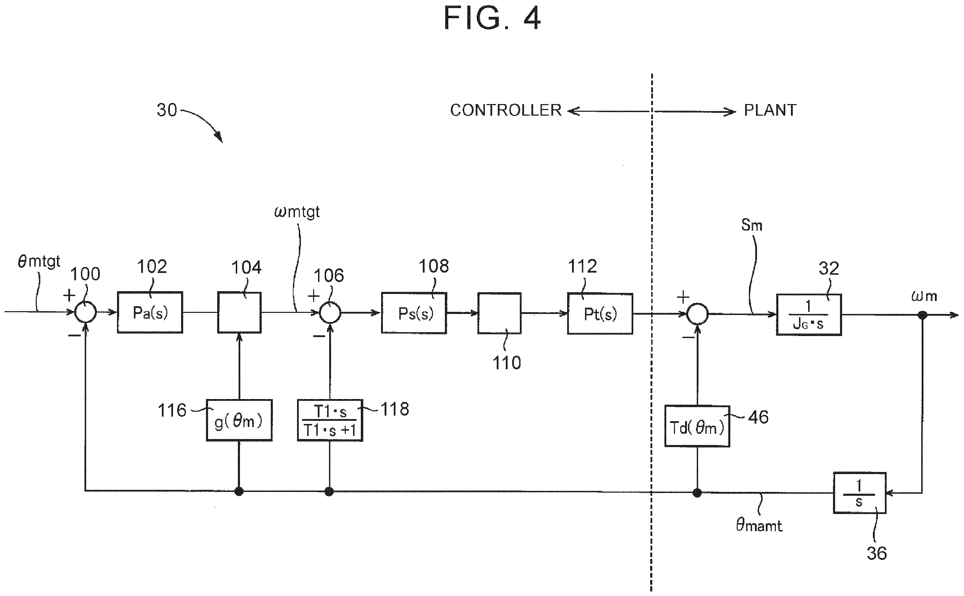

FIG. 4 illustrates an example of a servomechanism for controlling switching of the turning position of the detent plate 46 when the shift position is switched. As described above, when the detent turning angle $\theta d$ is the angle $\theta dnp$, the motor rotation angle $\theta m$ is the angle $\theta mnp$, and when the detent turning angle $\theta d$ is the angle $\theta dp$, the motor rotation angle $\theta m$ is the angle $\theta mp$.

For example, in a case of switching control for switching the shift position from the non-P shift position "NotP" to the P shift position "P", the motor 32 turns the detent plate 46 so that the detent turning angle $\theta d$ changes from the angle $\theta dnp$ to the angle $\theta dp$. In this case, a total angle amount $\theta total$ [rad] (= $\theta dtgt \times \rho$) obtained by multiplying a target detent turning angle amount $\theta dtgt$ (= $\theta dp - \theta dnp$) by the gear ratio $\rho$ is a target motor rotation angle amount $\theta mtgt$ that is a target angle amount of rotation of the motor 32. The target detent turning angle amount $\theta dtgt$ is a difference between the angle $\theta dp$ after the switching control and the angle $\theta dnp$ before the switching control. That is, the motor 32 rotates by the target motor rotation angle amount $\theta mtgt$ so that the motor rotation angle $\theta m$ changes from the angle $\theta mnp$ before the switching control to the angle $\theta mp$ after the switching control. The target motor rotation angle amount $\theta mtgt$ is input to the servomechanism illustrated in FIG. 4 as a motor rotation angle command value.

A first subtractor 100 outputs a deviation (= $\theta mtgt - \theta mamt$) obtained by subtracting a motor rotation angle amount $\theta mamt$ that is a rotation angle amount of actual rotation of the motor 32 from the target motor rotation angle amount $\theta mtgt$. An angle controller 102 generates and outputs an angular velocity command value based on a signal input from the first subtractor 100.

A first limiter 104 is in an operating state or a non-operating state. When the first limiter 104 is in the non-operating state, the first limiter 104 does not change the angular velocity command value input from the angle controller 102, and outputs the angular velocity command value directly as a command value for a motor angular velocity ωm [rad/sec] that is an angular velocity of the motor 32, that is, as a motor angular velocity command value ωmtgt. When the first limiter 104 is in the operating state, the first limiter 104 outputs the angular velocity command value input from the angle controller 102 with a limitation. A first limiter value ωmlmt1 [rad/sec] is preset in the first limiter 104. When the angular velocity command value input from the angle controller 102 is larger than the first limiter value ωmlmt1, the first limiter 104 in the operating state changes the angular velocity command value to the first limiter value ωmlmt1, and outputs the first limiter value ωmlmt1 as the motor angular velocity command value ωmtgt. When the angular velocity command value input from the angle controller 102 is not larger than the first limiter value ωmlmt1, the first limiter 104 in the operating state does not change the angular velocity command value, and outputs the angular velocity command value directly as the motor angular velocity command value ωmtgt. Switching of the operating state and the non-operating state of the first limiter 104 is described later.

A second subtractor 106 outputs a deviation obtained by subtracting an output of a high-pass filter 118 from the motor angular velocity command value ωmtgt output from the first limiter 104. An angular velocity controller 108 generates and outputs a torque command value based on the deviation output from the second subtractor 106.

A second limiter 110 outputs the torque command value input from the angular velocity controller 108 with a limitation. A second limiter value Tmlmt2 [Nm] is preset in the second limiter 110. The second limiter value Tmlmt2 is a torque command value preset so that the motor angular velocity ωm does not exceed a rated rotation speed. When the torque command value input from the angular velocity controller 108 is larger than the second limiter value Tmlmt2, the second limiter 110 changes the torque command value to the second limiter value Tmlmt2, and outputs the second limiter value Tmlmt2. Thus, the motor angular velocity ωm is controlled not to exceed the rated rotation speed. When the torque command value input from the angular velocity controller 108 is not larger than the second limiter value Tmlmt2, the second limiter 110 outputs the torque command value without a change.

A torque controller 112 generates and outputs a motor control signal Sm for controlling the motor torque Tm to be output from the motor 32 based on the torque command value input from the second limiter 110. The motor 32 is driven to rotate under control using the motor control signal Sm. The detent torque Td that changes depending on the motor rotation angle θm also acts on the motor 32. The motor angular velocity ωm is increased or reduced also by the detent torque Td.

The encoder 36 outputs a motor rotation angle amount θmamt by integrating the motor angular velocity ωm. The motor rotation angle amount θmamt output from the encoder 36 is input to the first subtractor 100.

A first limiter value setter 116 calculates a motor rotation angle θm (= θmnp + θmamt) indicating an actual rotational position of the motor 32 by adding the motor rotation angle amount θmamt input from the encoder 36 to the angle θmnp that is the motor rotation angle θm before the switching control. Next, the first limiter value setter 116 calculates a detent torque Td from the actual motor rotation angle θm based on a predetermined relationship between the motor rotation angle θm and the detent torque Td (for example, a detent torque profile Td(θm) described later). The first limiter value setter 116 calculates, as a detent torque power value g, a power value of the motor 32 in a case where the motor 32 outputs a torque (= Td / ρ) about the motor shaft 34 that is converted from the calculated detent torque Td. The first limiter value setter 116 generates a first limiter value ωmlmt1 from the calculated detent torque power value g based on a predetermined relationship between the detent torque power value g and the first limiter value ωmlmt1 to be set in the first limiter 104, and sets again, that is, updates the first limiter value ωmlmt1 currently set in the first limiter 104.

The high-pass filter 118 generates a signal associated with the actual motor angular velocity ωm based on the motor rotation angle amount θmamt, and outputs the signal to the second subtractor 106.

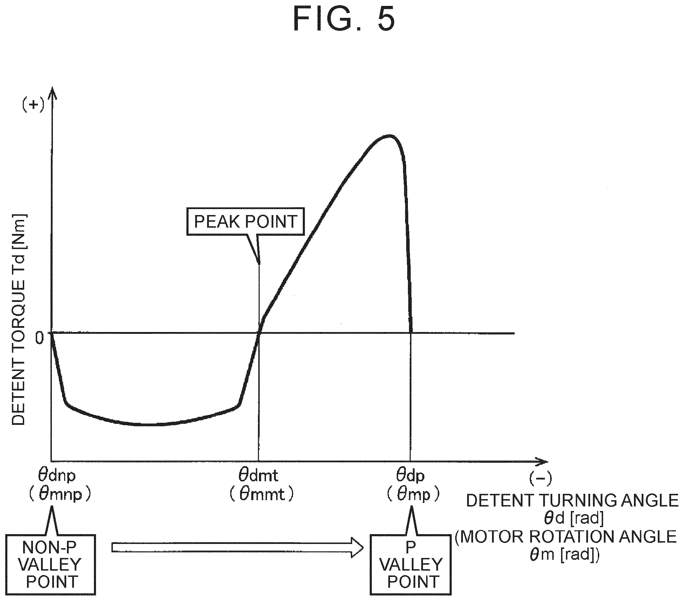

FIG. 5 illustrates an example of the detent torque profile showing a predetermined relationship between the detent turning angle θd and the detent torque Td. FIG. 5 illustrates a relationship between the detent turning angle θd and the detent torque Td in a case where the shift position is switched from the non-P shift position "NotP" (the detent turning angle θd is the angle θdnp) to the P shift position "P" (the detent turning angle θd is the angle θdp).

A "turning direction" is defined as a direction in which the detent plate 46 turns when the shift position is switched from one of the non-P shift position "NotP" and the P shift position "P" to the other. A "counter-turning direction" is defined as a direction opposite to the "turning direction". When the shift position is switched from the non-P shift position "NotP" to the P shift position "P", the motor 32 turns the detent plate 46 (as well as the manual shaft 44) in the direction opposite to the arrow B direction (negative direction) illustrated in FIG. 3. In this case, the "turning direction" is the direction opposite to the arrow B direction (negative direction) illustrated in FIG. 3. The detent turning angle θd negatively changes from the angle θdnp to the angle θdp. In this change, the engagement roller 58 moves from the non-P valley point 50a into the P valley point 52a over the peak point M.

When the direction of the detent torque Td is identical to the turning direction, the detent torque Td is a positive value. When the direction of the detent torque Td is identical to the counter-turning direction, the detent torque Td is a negative value. For example, when the turning direction is the negative direction and the direction of the detent torque Td is identical to the turning direction (negative direction), the detent torque Td is a positive value. When the turning direction is the negative direction and the direction of the detent torque Td is identical to the counter-turning direction (positive direction), the detent torque Td is a negative value. When the motor 32 turns the detent plate 46 in the turning direction, the detent torque Td having a negative value is a load torque for suppressing the turn of the detent plate 46, and the detent torque Td having a positive value is a drive torque for accelerating the turn of the detent plate 46.

When the engagement roller 58 pushes a portion between the non-P valley point 50a and the peak point M on the uneven surface 48, the detent torque Td is a torque in the counter-turning direction (positive direction, negative value). When the engagement roller 58 pushes a portion between the peak point M and the P valley point 52a on the uneven surface 48, the detent torque Td is a torque in the turning direction (negative direction, positive value).

As illustrated in FIG. 5, when the detent turning angle $\theta d$ ranges from the angle $\theta dnp$ to the angle $\theta dmt$, the detent torque Td is a negative value, and when the detent turning angle $\theta d$ ranges from the angle $\theta dmt$ to the angle $\theta dp$, the detent torque Td is a positive value. When the detent turning angle $\theta d$ is the angle $\theta dmt$, the detent torque Td is 0 to serve as a change point at which the negative value is reversed into the positive value. That is, the detent torque Td is a negative value before the detent turning angle $\theta d$ reaches the angle $\theta dmt$, and is a positive value after the detent turning angle $\theta d$ reaches the angle $\theta dmt$. In the switching control for the shift position, the detent plate 46 needs to turn in the turning direction with the motor torque Tm against the detent torque Td before the detent turning angle $\theta d$ reaches the angle $\theta dmt$, and the detent plate 46 turns in the turning direction with the detent torque Td after the detent turning angle $\theta d$ reaches the angle $\theta dmt$.

Also in a case where the shift position is switched from the P shift position "P" to the non-P shift position "NotP", the detent torque Td is a negative value before the detent turning angle $\theta d$ reaches the angle $\theta dmt$, and is a positive value after the detent turning angle $\theta d$ reaches the angle $\theta dmt$.

The speed reducing gear device 76 has a backlash (clearance in a rotational direction between contact surfaces of the gears or at the spline fitting portion). The first-stage gear pair 78 includes a first backlash portion G1 with a backlash g1 between the first gear 78a and the second gear 78b. The second-stage gear pair 80 includes a second backlash portion G2 with a backlash g2 between the third gear 80a and the fourth gear 80b. The spline fitting portion 74 includes a third backlash portion G3 with a backlash g3. Unless otherwise distinguished, the first backlash portion G1, the second backlash portion G2, and the third backlash portion G3 are hereinafter referred to as "backlash portions G". The first backlash portion G1 is an example of "backlash portion" of the present invention. In the case of the speed reducing gear device 76 of this embodiment that includes the double-stage gear pairs including the first-stage gear pair 78 and the second-stage gear pair 80, the first backlash portion G1 of the first-stage gear pair 78 located closest to the motor 32 on a power transmission path of the speed reducing gear device 76 is the example of "backlash portion" of the present invention.

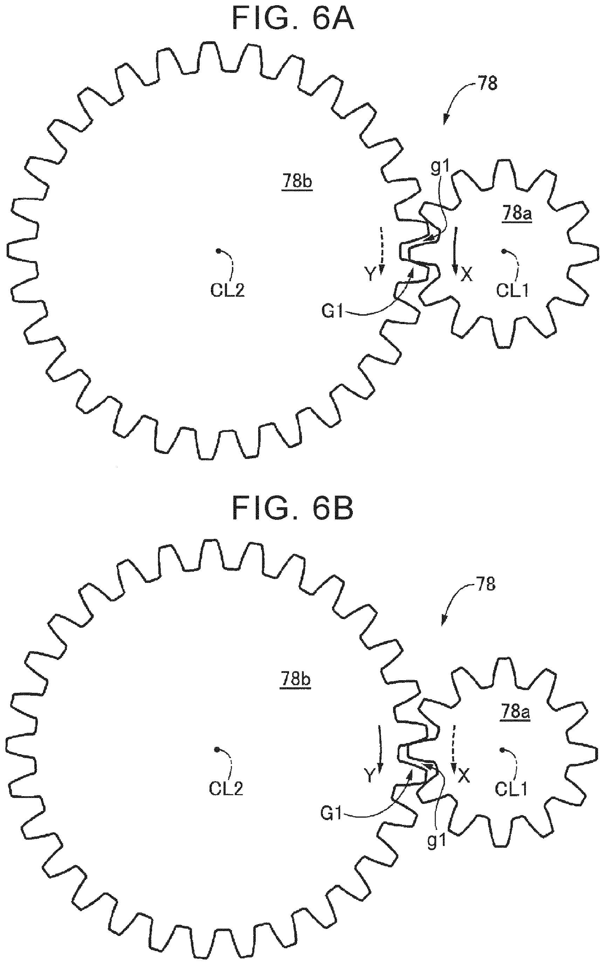

FIG. 6A and FIG. 6B are explanatory drawings of states of the backlash portion G in the speed reducing gear device 76 taking the first backlash portion G1 as an example. FIG. 6A illustrates a backlash-eliminated state on a side corresponding to the turning direction. FIG. 6B illustrates a backlash-eliminated state on a side corresponding to the counter-turning direction. In FIG. 6A and FIG. 6B, a continuous arrow X and a continuous arrow Y each indicate the turning direction on a driving gear, and a dashed arrow X and a dashed arrow Y each indicate the turning direction on a driven gear.

As illustrated in FIG. 6A, the first gear 78a is driven to rotate in the turning direction of the arrow X with the motor torque Tm, and the second gear 78b is driven to rotate in the turning direction of the arrow Y by the first gear 78a. In this case, a tooth of the first gear 78a and a tooth of the second gear 78b are in contact with each other on the side corresponding to the turning direction. In this state, the backlash g1 of the first backlash portion G1 is located on the side corresponding to the counter-turning direction. This state is referred to as "backlash-eliminated state on side corresponding to turning direction". As illustrated in FIG. 6B, the second gear 78b is driven to rotate in the turning direction of the arrow Y with the detent torque Td, and the first gear 78a is driven to rotate in the turning direction of the arrow X by the second gear 78b. In this case, a tooth of the first gear 78a and a tooth of the second gear 78b are in contact with each other on the side corresponding to the counter-turning direction. In this state, the backlash g1 of the first backlash portion G1 is located on the side corresponding to the turning direction. This state is referred to as "backlash-eliminated state on side corresponding to counter-turning direction".

Similarly, a state in which a tooth of the third gear 80a and a tooth of the fourth gear 80b are in contact with each other on the side corresponding to the turning direction (the backlash g2 is located on the side corresponding to the counter-turning direction) is referred to as "backlash-eliminated state on side corresponding to turning direction", and a state in which a tooth of the third gear 80a and a tooth of the fourth gear 80b are in contact with each other on the side corresponding to the counter-turning direction (the backlash g2 is located on the side corresponding to the turning direction) is referred to as "backlash-eliminated state on side corresponding to counter-turning direction". Further, a state in which a fitting tooth of the output shaft 38 and a fitting tooth of the manual shaft 44 are in contact with each other on the side corresponding to the turning direction (the backlash g3 is located on the side corresponding to the counter-turning direction) is referred to as "backlash-eliminated state on side corresponding to turning direction", and a state in which a fitting tooth of the output shaft 38 and a fitting tooth of the manual shaft 44 are in contact with each other on the side corresponding to the counter-turning direction (the backlash g3 is located on the side corresponding to the turning direction) is referred to as "backlash-eliminated state on side corresponding to counter-turning direction".

A state of the backlash portion G other than the "backlash-eliminated state on the side corresponding to the turning direction" and the "backlash-eliminated state on the side corresponding to the counter-turning direction" (for example, a transient state in which one of the "backlash-eliminated state on the side corresponding to the turning direction" and the "backlash-eliminated state on the side corresponding to the counter-turning direction" changes to the other) is referred to as "non-backlash-eliminated state". A change from the "backlash-eliminated state on the side corresponding to the counter-turning direction" or the "non-backlash-eliminated state" to the "backlash-eliminated state on the side corresponding to the turning direction" is referred to as "backlash elimination on side corresponding to turning direction". A change from the "backlash-eliminated state on the side corresponding to the turning direction" or the "non-backlash-eliminated state" to the "backlash-eliminated state on the side corresponding to the counter-turning direction" is referred to as "backlash elimination on side corresponding to counter-turning direction". A change from one of the "backlash-eliminated state on the side corresponding to the turning direction" and the "backlash-eliminated state on the side corresponding to the counter-turning direction" to the other is referred to as "reversal of backlash-eliminated state".

Description is given of a relationship between the detent turning angle $\theta d$ and the motor rotation angle $\theta m$ in a case where the speed reducing gear device 76 includes the backlash portion G. To facilitate understanding, the relationship between the detent turning angle $\theta d$ and the motor rotation angle $\theta m$ is described under the assumption that the overall gear ratio $\rho$ of the speed reducing gear device 76 is "1".

In both the cases where the shift position is switched from the non-P shift position "NotP" to the P shift position "P" and where the shift position is switched from the P shift position "P" to the non-P shift position "NotP", the angle $\theta dnp$, the angle $\theta dmt$, and the angle $\theta dp$ are unchanged as the detent turning angles $\theta d$. This is because the angle $\theta dnp$, the angle $\theta dmt$, and the angle $\theta dp$ are uniquely set as the detent turning angles $\theta d$ when the engagement roller 58 pushes the non-P valley point 50a, the peak point M, and the P valley point 52a, respectively.

When turning the detent plate 46 in the turning direction with the motor torque Tm, the motor 32 rotates in the turning direction but the detent plate 46 does not turn until the backlash elimination on the side corresponding to the turning direction is finished in the backlash portions G after the start of rotation of the motor 32. Thus, the motor rotation angle $\theta m$ changes in the turning direction in advance of the detent turning angle $\theta d$. In a period until the detent turning angle $\theta d$ reaches the angle $\theta dmt$ after the backlash elimination on the side corresponding to the turning direction is finished in all the backlash portions G, the backlash portions G are in the backlash-eliminated state on the side corresponding to the turning direction, and both the motor rotation angle $\theta m$ and the detent turning angle $\theta d$ change in the turning direction with the motor rotation angle $\theta m$ preceding the detent turning angle $\theta d$. The backlash elimination on the side corresponding to the counter-turning direction is started in the backlash portions G immediately after the detent turning angle $\theta d$ reaches the angle $\theta dmt$. In a period in which the backlash elimination on the side corresponding to the counter-turning direction is being executed in the backlash portions G, the detent turning angle $\theta d$ overtakes and precedes the motor rotation angle $\theta m$. In a period after the detent turning angle $\theta d$ reaches the angle $\theta dmt$ and the backlash elimination on the side corresponding to the counter-turning direction is finished in all the backlash portions G, the backlash portions G are in the backlash-eliminated state on the side corresponding to the counter-turning direction, and both the motor rotation angle $\theta m$ and the detent turning angle $\theta d$ change in the turning direction with the detent turning angle $\theta d$ preceding the motor rotation angle $\theta m$.

The relationship between the detent turning angle $\theta d$ and the motor rotation angle $\theta m$ is determined in advance by experiment or designing in both the cases where the shift position is switched from the non-P shift position "NotP" to the P shift position "P" and where the shift position is switched from the P shift position "P" to the non-P shift position "NotP". Thus, the detent torque profile $Td(\theta m)$ showing the predetermined relationship between the motor rotation angle $\theta m$ and the detent torque Td can be determined similarly to the predetermined relationship between the detent turning angle $\theta d$ and the detent torque Td in FIG. 5. The detent torque profile $Td(\theta m)$ is stored in a storage 30d, and is read into the first limiter value setter 116 as necessary.

Referring back to FIG. 1, the P command signal Spsw, the shift signal Ssft, and the motor rotation angle amount $\theta mamt$ are input to the SBW-ECU 30 from the inputter 12b, the shift switch 14, and the encoder 36, respectively. The SBW-ECU 30 outputs the motor control signal Sm to the motor 32.

The SBW-ECU 30 functionally includes a drive controller 30a, a first rotation angle determiner 30b, a second rotation angle determiner 30c, the storage 30d, and a torque estimator 30e.

For example, the drive controller 30a controls the motor torque Tm to be output from the motor 32 to control the detent turning angle θd when switching the shift position by using the servomechanism illustrated in FIG. 4. As described above, the detent torque Td is a negative value (torque in the counter-turning direction) before the motor rotation angle θm reaches the angle θmmt. The drive controller 30a causes the motor 32 to output the motor torque Tm in the turning direction to turn the detent plate 46 in the turning direction. Thus, the detent plate 46 starts to turn in the turning direction. At this time, the detent plate 46 turns in the turning direction while the backlash portions G are in the "backlash-eliminated state on the side corresponding to the turning direction".

The first rotation angle determiner 30b determines whether the motor rotation angle θm is a predetermined first rotation angle θm1. The predetermined first rotation angle θm1 is a predetermined rotation angle of the motor 32 after the detent torque Td is reversed from a torque in the counter-turning direction to a torque in the turning direction (that is, after the detent torque Td is reversed from a negative value to a positive value) and before the backlash elimination on the side corresponding to the counter-turning direction is finished in the first backlash portion G1 by the reversed detent torque Td. The description "before the backlash elimination is finished in the first backlash portion G1 by the reversed detent torque Td" means a timing "before the backlash elimination in the first backlash portion G1 is finished under the assumption that the backlash elimination is executed only by the reversed detent torque Td". In this embodiment, the predetermined first rotation angle θm1 is set to the angle θmmt that is the motor rotation angle θm corresponding to the case where the detent turning angle θd is the angle θdmt.

When the first rotation angle determiner 30b determines that the motor rotation angle θm is not the predetermined first rotation angle θm1, that is, the motor rotation angle θm does not reach the predetermined first rotation angle θm1, the drive controller 30a causes the motor 32 to output the motor torque Tm in the turning direction.

When the first rotation angle determiner 30b determines that the motor rotation angle θm is the predetermined first rotation angle θm1 (= θmmt), that is, the motor rotation angle θm reaches the predetermined first rotation angle θm1, the drive controller 30a reverses the motor torque Tm from a torque in the turning direction to a torque in the counter-turning direction. When the detent torque Td is reversed from the torque in the counter-turning direction to the torque in the turning direction, the drive controller 30a reverses the motor torque Tm from the torque in the turning direction to the torque in the counter-turning direction immediately after the reversal of the detent torque Td. When causing the motor 32 to output the motor torque Tm in the counter-turning direction, the drive controller 30a switches the first limiter 104 from the non-operating state to the operating state. That is, the drive controller 30a limits the motor angular velocity command value ωmtgt to the first limiter value ωmlmt1. With the motor torque Tm output from the motor 32 in the counter-turning direction, the first gear 78a reduces its speed and the "reversal of the backlash-eliminated state" from the "backlash-eliminated state on the side corresponding to the turning direction" to the "backlash-eliminated state on the side corresponding to the counter-turning direction" is executed in the first backlash portion G1. As described above, the detent torque Td is a positive value (torque in the turning direction) after the motor rotation angle θm reaches the angle θmmt. Since the detent torque Td is the torque in the turning direction, the detent plate 46 continues to turn in the turning direction even though the drive controller 30a causes the motor 32 to output the motor torque Tm in the counter-turning direction.

The second rotation angle determiner 30c determines whether the motor rotation angle θm is a predetermined second rotation angle θm2. The predetermined second rotation angle θm2 is a predetermined rotation angle of the motor 32 at which the backlash elimination on the side corresponding to the counter-turning direction is presumably finished in the first backlash portion G1. The predetermined second rotation angle θm2 is determined in advance by experiment or designing.

When the second rotation angle determiner 30c determines that the motor rotation angle θm is not the predetermined second rotation angle θm2, that is, the motor rotation angle θm does not reach the predetermined second rotation angle θm2, the drive controller 30a keeps the operating state of the first limiter 104.

When the second rotation angle determiner 30c determines that the motor rotation angle θm is the predetermined second rotation angle θm2, that is, the motor rotation angle θm reaches the predetermined second rotation angle θm2, the drive controller 30a switches the first limiter 104 from the operating state to the non-operating state. Then, the detent plate 46 turns in the turning direction with the detent torque Td, and the detent turning angle θd reaches the angle corresponding to the shift position after the switching control (that is, the motor rotation angle θm reaches the angle corresponding to the shift position after the switching control).

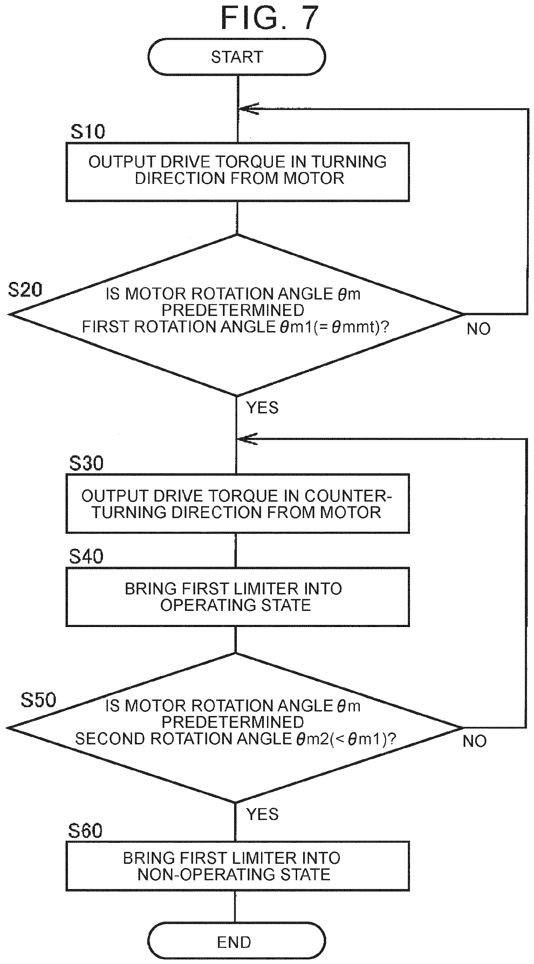

FIG. 7 is an exemplary flowchart illustrating control operations of the SBW-ECU 30 that secures quietness by reducing gear rattling noise when the shift position is switched from the non-P shift position "NotP" to the P shift position "P". In the switching of the shift position, the motor rotation angle θm changes from the angle θmnp to the angle θmp.

First, in Step S10 corresponding to the function of the drive controller 30a, the motor 32 outputs the motor torque Tm in the turning direction and starts to rotate in the turning direction. Thus, the backlash elimination on the side corresponding to the turning direction is executed in the backlash portions G. When the backlash elimination is finished in all the backlash portions G, the detent plate 46 starts to turn in the turning direction (direction opposite to the arrow B direction in FIG. 3). Then, Step S20 is executed.

In Step S20 corresponding to the function of the first rotation angle determiner 30b, determination is made as to whether the motor rotation angle $\theta m$ is the predetermined first rotation angle $\theta m1$. When the determination result is "YES" in Step S20, Step S30 is executed. When the determination result is "NO" in Step S20, Step S10 is executed again.

In Step S30 corresponding to the function of the drive controller 30a, the motor 32 outputs the motor torque Tm in the counter-turning direction. Then, Step S40 is executed.

In Step S40 corresponding to the function of the drive controller 30a, the first limiter 104 comes into the operating state. With the motor torque Tm in the counter-turning direction from the motor 32 in Step S30 and Step S40, the first gear 78a reduces its speed and the "reversal of the backlash-eliminated state" is executed in the first backlash portion G1. Then, Step S50 is executed.

In Step S50 corresponding to the function of the second rotation angle determiner 30c, determination is made as to whether the motor rotation angle $\theta m$ is the predetermined second rotation angle $\theta m2$. When the determination result is "YES" in Step S50, Step S60 is executed. When the determination result is "NO" in Step S50, Step S30 is executed again.

In Step S60 corresponding to the function of the drive controller 30a, the first limiter 104 comes into the non-operating state. Then, the detent plate 46 turns in the turning direction with the detent torque Td, and the motor rotation angle $\theta m$ reaches the angle $\theta mp$ corresponding to the P shift position "P" after the switching control. Then, the operations are terminated.

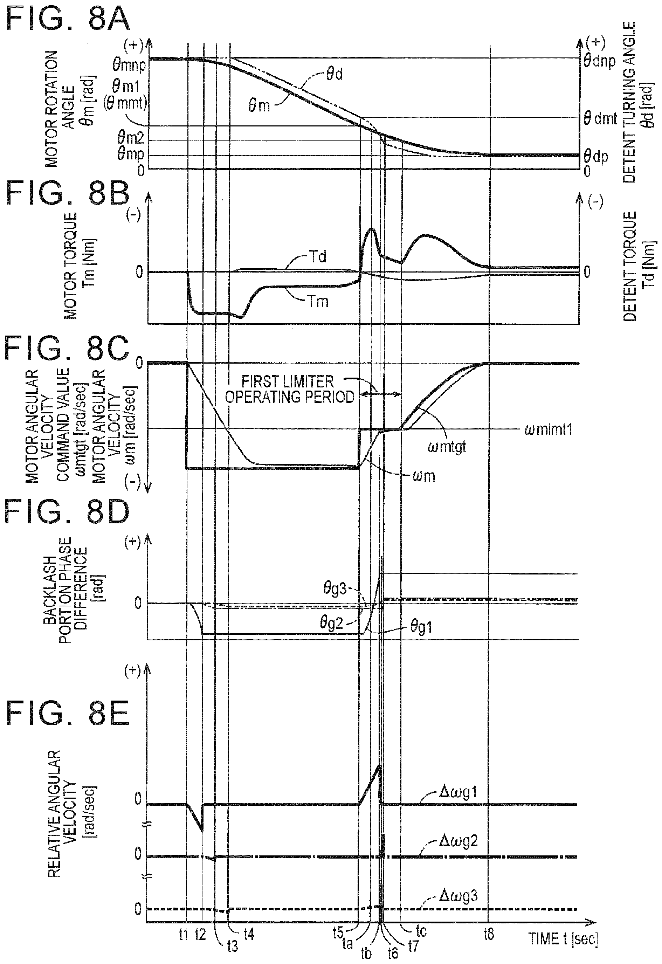

FIG. 8A to FIG. 8E are exemplary time charts in a case where the operations in the flowchart of FIG. 7 are executed. In FIG. 8A to FIG. 8E, a horizontal axis represents time t [sec]. In FIG. 8A, a vertical axis represents transition of the motor rotation angle $\theta m$ and the detent turning angle $\theta d$. In FIG. 8B, a vertical axis represents transition of the motor torque Tm and the detent torque Td. In FIG. 8C, a vertical axis represents transition of the motor angular velocity command value $\omega mtgt$ and the motor angular velocity $\omega m$. In FIG. 8D, a vertical axis represents transition of backlash portion phase differences in the backlash portions G. In FIG. 8E, a vertical axis represents transition of relative angular velocities between meshing teeth in the backlash portions G. Backlash portion phase differences $\theta g1$, $\theta g2$, and $\theta g3$ illustrated in FIG. 8D are phase differences that cancel out influence of the gear ratio, and are a phase difference in the first backlash portion G1 (= rotation angle of first gear 78a - rotation angle of second gear 78b / $\rho 1$), a phase difference in the second backlash portion G2 (= rotation angle of third gear 80a - rotation angle of fourth gear 80b / $\rho 2$), and a phase difference in the third backlash portion G3 (= turning angle of output shaft 38 - turning angle of manual shaft 44), respectively. Relative angular veloci-

ties $\Delta\omega g1$, $\Delta\omega g2$, and $\Delta\omega g3$ illustrated in FIG. 8E are relative angular velocities that cancel out the influence of the gear ratio, and are an angular velocity difference between the first gear 78a and the second gear 78b (= angular velocity of first gear 78a - angular velocity of second gear 78b / $\rho 1$), an angular velocity difference between the third gear 80a and the fourth gear 80b (= angular velocity of third gear 80a - angular velocity of fourth gear 80b / $\rho 2$), and an angular velocity difference between the output shaft 38 and the manual shaft 44 (= angular velocity of output shaft 38 - angular velocity of manual shaft 44), respectively. Because of the overall gear ratio $\rho$ of the speed reducing gear device 76, a difference between the angle $\theta mnp$ and the angle $\theta mp$ in the motor rotation angle $\theta m$ (= $\theta mnp$ - $\theta mp$) is $\rho$ times as large as a difference between the angle $\theta dnp$ and the angle $\theta dp$ in the detent turning angle $\theta d$ (= $\theta dnp$ - $\theta dp$).

At a time t1, the switching control for the shift position from the non-P shift position "NotP" to the P shift position "P" is started, and the motor 32 starts to output the motor torque Tm for turning the detent plate 46 in the turning direction (negative direction). At the time 11, the detent turning angle $\theta d$ is the angle $\theta dnp$, and the motor rotation angle $\theta m$ is the angle $\theta mnp$. Before the time 11, the rotation and turn of the motor 32, the speed reducing gear device 76, the manual shaft 44, and the detent plate 46 are stopped. Thus, the relative angular velocities $\Delta\omega g1$, $\Delta\omega g2$, and $\Delta\omega g3$ are 0. For example, the backlash portion phase differences $\theta g1$, $\theta g2$, and $\theta g3$ are 0 assuming the non-backlash-eliminated state in which halves of each of the backlashes g1, g2, and g3 of the backlash portions G are located on the side corresponding to the turning direction and on the side corresponding to the counter-turning direction at the time t1, respectively.

When the motor 32 rotates in the turning direction in a period from the time t1 to a time t2 (> 11), the first gear 78a rotates in the turning direction and the backlash elimination on the side corresponding to the turning direction is executed in the first backlash portion G1. In this period, the relative angular velocity $\Delta\omega g1$ negatively increases, and the backlash portion phase difference $\theta g1$ negatively increases. At the time t2, the backlash elimination on the side corresponding to the turning direction is finished in the first backlash portion G1. Thus, after the time t2, the relative angular velocity $\Delta\omega g1$ is 0, and the backlash portion phase difference $\theta g1$ is kept at the value at the time t2.

In a period from the time t2 to a time t3 (> t2), the backlash elimination on the side corresponding to the turning direction is similarly executed in the second backlash portion G2. In a period from the time t3 to a time t4 (> t3), the backlash elimination on the side corresponding to the turning direction is similarly executed in the third backlash portion G3.

At the time t4, the backlash elimination on the side corresponding to the turning direction is finished in all the backlash portions G. After the time t4, the backlash portions G are in the backlash-eliminated state on the side corresponding to the turning direction. The manual shaft 44 and the detent plate 46 turn in the turning direction with the motor torque Tm in the turning direction, and the motor rotation angle θm and the detent turning angle θd gradually decrease. By turning the detent plate 46, the detent torque Td in the counter-turning direction (negative value) acts on the detent plate 46.

At a time t5 (> t4), the motor rotation angle θm reaches the predetermined first rotation angle θm1 (= angle θmmt). At this time, the detent turning angle θd is the angle θdmt, and the detent torque Td is 0. When the motor rotation angle θm reaches the predetermined first rotation angle θm1, the motor torque Tm is reversed from a torque in the turning direction to a torque in the counter-turning direction. The first limiter 104 is switched from the non-operating state to the operating state to limit the motor angular velocity command value ωmtgt to the first limiter value ωmlmt1.

In a period after the time t5, the detent torque Td in the turning direction (positive value) acts on the detent plate 46. In a period from the time t5 to a time t6 (> t5), the turn of the manual shaft 44 in the turning direction is accelerated by the detent torque Td in the turning direction, and the "reversal of the backlash-eliminated state" from the "backlash-eliminated state on the side corresponding to the turning direction" to the "backlash-eliminated state on the side corresponding to the counter-turning direction" is executed in the third backlash portion G3. In this period, the relative angular velocity Δωg3 positively increases, and the backlash portion phase difference θg3 positively increases. At the time t6, the backlash elimination on the side corresponding to the counter-turning direction is finished in the third backlash portion G3. Thus, after the time t6, the relative angular velocity Δωg3 is 0, and the backlash portion phase difference θg3 is kept at the value at the time t6.

In a period from the time t6 to a time t7 (> t6), the "reversal of the backlash-eliminated state" is similarly executed in the second backlash portion G2. At the time t7, the backlash elimination on the side corresponding to the counter-turning direction is finished in the second backlash portion G2.

In a period from the time t5 to a time tb (t5 < tb < t7), the speed of the first gear 78a is reduced by the motor torque Tm in the counter-turning direction, and the "reversal of the backlash-eliminated state" from the "backlash-eliminated state on the side corresponding to the turning direction" to the "backlash-eliminated state on the side corresponding to the counter-turning direction" is executed in the first backlash portion G1. In this period, the relative angular velocity Δωg1 positively increases, and the backlash portion phase difference θg1 positively increases. At the time tb, the backlash elimination on the side corresponding to the counter-turning direction is finished in the first backlash portion G1. The backlash elimination on the side corresponding to the counter-turning direction is finished in the first backlash portion G1 by the motor torque Tm in the counter-turning direction before the time t7 when the backlash elimination on the side corresponding to the counter-turning direction is started in the first backlash portion G1 after the backlash elimination on the side corresponding to the counter-turning direction is finished in the third backlash portion G3 and the second backlash portion G2 by the detent torque Td. At the time t7, the backlash elimination on the side corresponding to the counter-turning direction is finished in all the backlash portions G. To be exact, in a period from the time tb to the time t7, the "reversal of the backlash-eliminated state" is executed in the second backlash portion G2 by the reversed motor torque Tm as well as the reversed detent torque Td.

At a time tc (> t7), the motor rotation angle θm reaches the predetermined second rotation angle θm2. When the motor rotation angle θm reaches the predetermined second rotation angle θm2, the first limiter 104 is switched from the operating state to the non-operating state to terminate the limitation of the motor angular velocity command value ωmtgt to the first limiter value ωmlmt1.

At a time t8 (> tc), the detent turning angle θd reaches the angle θdp, the motor rotation angle θm reaches the angle θmp, and the turn and rotation of the manual shaft 44 and the motor 32 are stopped. Thus, the switching control for the shift position from the non-P shift position "NotP" to the P shift position "P" is finished.

In a period from a time ta (t5 < ta < tb) to the time tb, the motor torque Tm (absolute value) is reduced as compared to the motor torque Tm at the time ta. The time ta includes a time immediately before the time tb when the backlash elimination on the side corresponding to the counter-turning direction is finished in the first backlash portion G1. The reduction of the motor torque Tm leads to reduction of gear rattling noise caused along with the finish of the backlash elimination in the first backlash portion G1 at the time tb, as compared to a case where the motor torque Tm is not reduced. For example, in a case where the first-stage gear pair 78 and the second-stage gear pair 80 include bevel gears, it is possible to reduce abnormal noise caused when the gears having hit each other at the finish of the backlash elimination project in an axial direction to hit a case.

Referring back to FIG. 1, the torque estimator 30e estimates the detent torque Td based on the motor torque Tm and the motor angular velocity ωm during the switching control for the shift position (for example, changes in the waveforms in the time charts of FIG. 8A to FIG. 8E). The detent torque Td is calculated from Expression (1) based on an equation of motion related to the turn of the detent plate 46. A symbol α [rad/sec$^2$] represents an angular velocity change rate (angular acceleration) that is a change rate of the motor angular velocity ωm, and a symbol I [Kg·m$^2$] represents a moment of inertia of the detent plate 46 and, for example, the manual shaft 44 and the speed reducing gear device 76 driven together with the detent plate 46.

$$Tm \times \rho - Td = I \times \alpha \qquad (1)$$

By calculating the detent torque Td at each motor rotation angle θm as needed, the detent torque profile Td(θm) showing the relationship between the motor rotation angle θm and the detent torque Td is determined in real time. The detent torque profile Td(θm) estimated by the torque estimator 30e is written in the storage 30d and updated as needed. Thus, the actual detent torque profile Td(θm) that is not influenced by, for example, manufacturing variations of the speed reducing gear device 76 and manufacturing variations of the uneven surface 48 of the detent plate 46 is used in the switching control for the shift position. For example, a control timing is corrected by making determination on a timing when the motor rotation angle θm reaches the angle θmmt (= predetermined first rotation angle θm1) based on the detent torque profile Td(θm) updated in real time during the switching control for the shift position. The relationship between the detent turning angle θd and the detent torque Td can also be determined by a similar method.

Comparative Example

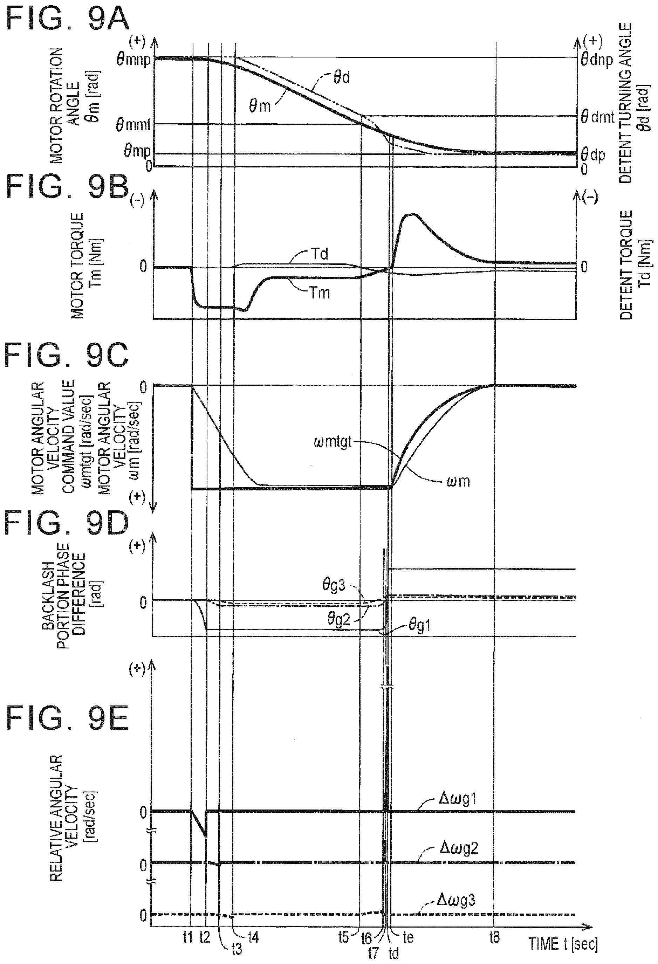

Time charts of a comparative example are described. FIG. 9A to FIG. 9E are exemplary time charts of the comparative example. The time charts of FIG. 9A to FIG. 9E correspond to the time charts of FIG. 8A to FIG. 8E in the embodiment described above.

The time charts of FIG. 9A to FIG. 9E are substantially the same as the time charts of FIG. 8A to FIG. 8E, but differ from the time charts of FIG. 8A to FIG. 8E in the following matter. In FIG. 8A to FIG. 8E, the motor torque Tm is reversed from the torque in the turning direction to the torque in the counter-turning direction before the time t7 when the backlash elimination on the side corresponding to the counter-turning direction is started in the first backlash portion G1 after the backlash elimination on the side corresponding to the counter-turning direction is finished in the third backlash portion G3 and the second backlash portion G2 by the detent torque Td. In FIG. 9A to FIG. 9E, the motor torque Tm is reversed from the torque in the turning direction to the torque in the counter-turning direction after a time td (> t7) when the backlash elimination on the side corresponding to the counter-turning direction is finished in the first backlash portion G1 by the detent torque Td. The difference from FIG. 8A to FIG. 8E is mainly described, and substantially common parts are represented by the same reference symbols to omit description as appropriate.

At the time t5, the motor rotation angle θm reaches the angle θmmt, the detent turning angle θd reaches the angle θdmt, and the detent torque Td reaches 0. As the motor torque Tm, a drive torque in the turning direction is output continuously. The first limiter 104 is also kept in the non-operating state.

In the period after the time t5, the detent torque Td in the turning direction acts on the detent plate 46. By the detent torque Td, the backlash elimination on the side corresponding to the counter-turning direction is executed in the third backlash portion G3 in the period from the time t5 to the time t6, and is executed in the second backlash portion G2 in the period from the time t6 to the time t7. In a period from the time t7 to the time td, the backlash elimination on the side corresponding to the counter-turning direction is executed in the first backlash portion G1 by the detent torque Td. At the time td, the backlash elimination on the side corresponding to the counter-turning direction is finished in the first backlash portion G1. Thus, the backlash elimination on the side corresponding to the counter-turning direction is finished in all the backlash portions G.

At a time te (> td) after the time td, the motor torque Tm is reversed from the torque in the turning direction to the torque in the counter-turning direction. At the time t8 (> te), the detent turning angle θd reaches the angle θdp, the motor rotation angle θm reaches the angle θmp, and the turn and rotation of the manual shaft 44 and the motor 32 are stopped.

In this comparative example, the speeds of the rotation shafts and the gears on the power transmission path of the speed reducing gear device 76 are increased in sequence from the detent plate 46 to the motor 32 by the detent torque Td reversed from the torque in the counter-turning direction to the torque in the turning direction at the time t5. Therefore, the gear rattling noise is likely to increase in the first backlash portion G1 of the first-stage gear pair 78 located closest to the motor 32 on the power transmission path of the speed reducing gear device 76.

This embodiment provides the detent plate 46, the flat spring 56, the motor 32, the speed reducing gear device 76, and the SBW-ECU 30. The detent plate 46 is turnable about the turn axis CL3, and includes the non-P valley 50 and the P valley 52 corresponding to the shift positions on the peripheral surface. The flat spring 56 includes the engagement roller 58 engageable with the non-P valley 50 or the P valley 52 of the detent plate 46, and pushes the engagement roller 58 toward the peripheral surface of the detent plate 46 to hold the detent plate 46 at a turning position where the engagement roller 58 pushes the non-P valley 50 or the P valley 52. The speed reducing gear device 76 transmits the motor torque Tm output from the motor 32 to the detent plate 46. The SBW-ECU 30 controls the motor torque Tm. The SBW-ECU 30 is configured to reverse the motor torque Tm after the SBW-ECU 30 makes the motor 32 output the motor torque Tm for turning the detent plate 46 in the turning direction to switch the shift position, then the detent torque generated in the detent plate 46 by a push of the engagement roller 58 is reversed in the turning direction from a counter-turning direction opposite to the turning direction, and before the backlash elimination in the first backlash portion G1 of the speed reducing gear device 76 by the reversed detent torque Td is finished. As described above, the backlash elimination on the side corresponding to the counter-turning direction has already been finished in the first backlash portion G1 by the reversed motor torque Tm even though the backlash elimination on the side corresponding to the counter-turning direction will be executed by the reversed detent torque Td. Therefore, a necessary backlash elimination amount is 0. The necessary backlash elimination amount is a size of the backlash g1 necessary for the backlash elimination on the side corresponding to the counter-turning direction in the first backlash portion G1 by the reversed detent torque Td. As the necessary backlash elimination amount using the reversed detent torque Td decreases, a period of an increase in the speed of the second gear 78b by the reversed detent torque Td decreases. In this embodiment, the gear rattling noise can be reduced in the first backlash portion G1 because there is no period in which the speed of the second gear 78b arranged on a side close to the detent plate 46 in the first backlash portion G1 is increased by the reversed detent torque Td.

According to this embodiment, the SBW-ECU 30 reverses the motor torque Tm immediately after the detent torque Td is reversed from the torque in the counter-turning direction to the torque in the turning direction. Since the motor torque Tm is reversed immediately after the detent torque Td is reversed, it is possible to reduce an amount of a decrease in the angular velocity in the turning direction of the detent plate 46 due to the reversal of the motor torque Tm, thereby suppressing an increase in time required to switch the shift position.

According to this embodiment, the SBW-ECU 30 estimates the detent turning angle $\theta d$ from the motor rotation angle $\theta m$ by using the relationship between the detent turning angle $\theta d$ and the motor rotation angle $\theta m$ that is determined in advance by experiment or designing. Thus, the SBW-ECU 30 can reverse the motor torque Tm while determining, for example, that the detent torque Td is reversed from the torque in the counter-turning direction to the torque in the turning direction when the motor rotation angle $\theta m$ reaches the predetermined first rotation angle $\theta m1$ (= $\theta mmt$). Costs of the shift-by-wire system 40 can be reduced because there is no need to provide the encoder 82 that is the sensor configured to detect the detent turning angle $\theta d$.

According to this embodiment, the SBW-ECU 30 reduces the motor torque Tm immediately before the backlash elimination on the side corresponding to the counter-turning direction is finished in the first backlash portion G1 of the speed reducing gear device 76 within the period in which the backlash elimination is executed. Since the motor torque Tm is reduced immediately before the backlash elimination is finished, that is, immediately before the one first gear 78a hits the other second gear 78b in the speed reducing gear device 76, the gear rattling noise can be reduced as compared to a case where the motor torque Tm is not reduced immediately before the backlash elimination is finished.

According to this embodiment, the SBW-ECU 30 estimates the detent torque Td based on the motor torque Tm and the angular acceleration of the motor 32, that is, the angular velocity change rate $\alpha$ during the switching control for the shift position from the non-P shift position "NotP" to the P shift position "P", and corrects the control timing to reverse the motor torque Tm based on the estimated detent torque Td. For example, the actual detent torque Td is influenced by manufacturing variations of the speed reducing gear device 76 and manufacturing variations of the non-P valley 50 and the P valley 52 of the detent plate 46. Since the detent torque Td is estimated based on the actual motor torque Tm and the actual angular velocity change rate $\alpha$ of the motor 32 and the control timing to reverse the motor torque Tm is corrected, the control timing to reverse the motor torque Tm can be set earlier than that in a case where the control timing is set later in consideration of the influence of the manufacturing variations. Therefore, the backlash elimination is promptly executed in the first backlash portion G1 of the speed reducing gear device 76 by the reversed motor torque Tm. Thus, the gear rattling noise is reduced easily.

According to this embodiment, the speed reducing gear device 76 includes the double-stage gear pairs including the first-stage gear pair 78 and the second-stage gear pair 80, and the first backlash portion G1 in which the backlash elimination is finished by the reversed motor torque Tm before the start of the backlash elimination by the reversed detent torque Td is in the first-stage gear pair 78 located closest to the motor 32 on the power transmission path of the speed reducing gear device 76 in the double-stage gear pairs. In the case where the speed reducing gear device 76 includes the double-stage gear pairs including the first-stage gear pair 78 and the second-stage gear pair 80, the first-stage gear pair 78 and the second-stage gear pair 80 include the first backlash portion G1 and the second backlash portion G2, respectively. In the backlash elimination in the first backlash portion G1 and the second backlash portion G2 by the reversed detent torque Td, the speeds of the gears 78a, 78b, 80a, and 80b on the power transmission path of the speed reducing gear device 76 are increased in sequence from the detent plate 46 to the motor 32. Therefore, the gear rattling noise is likely to increase in the first backlash portion G1 of the first-stage gear pair 78 located closest to the motor 32 on the power transmission path of the speed reducing gear device 76. The backlash elimination on the side corresponding to the counter-turning direction is finished by the reversed motor torque Tm in the first backlash portion G1 of the first-stage gear pair 78 located closest to the motor 32 before the start of the backlash elimination on the side corresponding to the counter-turning direction by the reversed detent torque Td. Thus, the gear rattling noise can be reduced in the first backlash portion G1.

Although the embodiment of the present invention is described above in detail with reference to the drawings, the present invention is also applicable to other embodiments.

In the embodiment described above, the speed reducing gear device 76 includes the double-stage gear pairs including the first-stage gear pair 78 and the second-stage gear pair 80, but the present invention is not limited to this case. For example, the speed reducing gear device 76 may include a single-stage gear pair (for example, one first-stage gear pair 78 is provided alone between the motor 32 and the manual shaft 44) or multistage gear pairs including three or more gear pairs. In a case where the speed reducing gear device 76 includes the multistage gear pairs, a backlash portion of a gear pair located closest to the motor 32 on the power transmission path of the speed reducing gear device 76 is an example of "backlash portion" of the present invention.

In the embodiment described above, the SBW-ECU 30 reverses the motor torque Tm while determining, using the relationship between the detent turning angle θd and the motor rotation angle θm that is determined in advance by experiment or designing, that the detent torque Td is reversed from the torque in the counter-turning direction to the torque in the turning direction when the motor rotation angle θm reaches the predetermined first rotation angle θm1 (= θmmt). The present invention is not limited to this case. For example, the SBW-ECU 30 may reverse the motor torque Tm when the detent turning angle θd detected by the encoder 82 provided on the manual shaft 44 reaches the angle θdmt. That is, the SBW-ECU 30 may reverse the motor torque Tm based on the detent turning angle θd. Since the detent torque Td changes depending on the detent turning angle θd, the timing to reverse the motor torque Tm can accurately be controlled by reversing the motor torque Tm based on the detent turning angle θd.

In the embodiment described above, the motor torque Tm is reduced immediately before the time tb, but need not essentially be reduced. Even if the motor torque Tm is not reduced, the gear rattling noise can be reduced in the first backlash portion G1 as compared to a case where the motor torque Tm is not reversed.

In the embodiment described above, the torque estimator 30e of the SBW-ECU 30 updates the detent torque profile Td(θm) as needed, but the present invention is not limited to this case. For example, the torque estimator 30e may accumulate values of the motor rotation angle θm, the motor torque Tm, and the motor angular velocity ωm during the switching control for the shift position, and determine the detent torque profile Td(θm) based on the accumulated values. In this case, after the switching control for the shift position is finished, the estimated detent torque profile Td(θm) is written in the storage 30d for update, and the control timing is corrected based on the updated detent torque profile Td(θm). The SN ratio is low in the calculation of the angular velocity change rate α of the motor 32. Therefore, the angular velocity change rate α is preferably calculated through a filter. However, the calculation through the filter causes a delay. Even though the correction of the control timing is attempted with the detent torque Td calculated, that is, estimated during the switching control for the shift position, an appropriate control timing may be lost due to the delay in the calculation of the angular velocity change rate α of the motor 32. By correcting the control timing after the switching control for the shift position is finished with the detent torque Td estimated, for example, a non-causal zero-phase filter that does not cause a calculation delay can be used in the calculation of the angular velocity change rate α. Thus, the detent torque Td can be estimated accurately.

In the embodiment described above, the backlash elimination on the side corresponding to the counter-turning direction is finished in the first backlash portion G1 by the reversed motor torque Tm before the start of the backlash elimination on the side corresponding to the counter-turning direction in the first backlash portion G1 by the reversed detent torque Td. The present invention is not limited to this case. For example, the motor torque Tm may be reversed at a timing before the detent torque Td is reversed and the backlash elimination on the side corresponding to the counter-turning direction is finished in the first backlash portion G1 by the reversed detent torque Td. In this case, the backlash elimination on the side corresponding to the counter-turning direction is executed in the first backlash portion G1 by the reversed motor torque Tm, thereby reducing a necessary amount of the backlash elimination on the side corresponding to the counter-turning direction in the first backlash portion G1 by the reversed detent torque Td as compared to a case where the backlash elimination on the side corresponding to the counter-turning direction is not executed in the first backlash portion G1 by the reversed motor torque Tm. Thus, the gear rattling noise can be reduced in the first backlash portion G1 because of reduction of the period in which the speed of the second gear 78b arranged on the side close to the detent plate 46 in the first backlash portion G1 is increased by the reversed detent torque Td. Further, the motor torque Tm may be reversed at a timing before the detent torque Td is reversed and the backlash elimination on the side corresponding to the counter-turning direction is finished in the second backlash portion G2 by the reversed detent torque Td. Also in this case, the gear rattling noise can be reduced in the first backlash portion G1 because of reduction of the period in which the speed is increased by the detent torque Td.

The embodiment described above is directed to the switching control for switching the shift position from the non-P shift position "NotP" to the P shift position "P". The present invention is also applicable to the switching control for switching the shift position from the P shift position "P" to the non-P shift position "NotP". Although the detent plate 46 includes two recesses, the present invention is also applicable to a case where the detent plate 46 includes three or more recesses (for example, four recesses for positioning at turning positions corresponding to a P shift position, an R shift position, an N shift position, and a D shift position to be switched when a P mode, an R mode, an N mode, and a D mode are selected, respectively).

In the embodiment described above, the parking switch 12 is provided separately from the shift switch 14, but the present invention is not limited to this case. For example, the present invention is also applicable to a case where the P mode is electrically selectable by the shift switch 14. In this case, there is no need to provide the parking switch 12.

Although the exemplary embodiment of the present invention is described above, various modifications and revisions may be made to the present invention based on knowledge of persons having ordinary skill in the art without departing from the scope of the accompanying claims.

**Claims**

1. A shift-by-wire system (40) configured to switch shift positions, the shift-by-wire system (40) comprising:

   a detent plate (46) turnable about a turn axis, and including a plurality of recesses (50, 52) corresponding to the shift positions on a peripheral surface of the detent plate (46);
   a detent spring (56) including an engagement portion (58) engageable with any one of the recesses (50, 52) of the detent plate (46), and configured to push the engagement portion (58) toward the peripheral surface of the detent plate (46) to hold the detent plate (46) at a turning position where the engagement portion (58) pushes any one of the recesses (50, 52);
   a rotating electrical machine (32);
   a gear device (76) configured to transmit a rotating electrical machine torque output from the rotating electrical machine (32) to the detent plate (46); and
   an electronic control unit (30) configured to control the rotating electrical machine torque,

   wherein, the electronic control unit (30) is configured to reverse the rotating electrical machine torque after the electronic control unit (30) makes the rotating electrical machine (32) output the rotating electrical machine torque for turning the detent plate (46) in a turning direction to switch the shift position, then the detent torque generated in the detent plate (46) by a push of the engagement portion (58) is reversed in the turning direction from a torque in a counter-turning direction to a torque in the turning direction being opposite to the torque in the counter-turning direction, and before backlash elimination on a side corresponding to the counter-turning direction in a backlash portion of the gear device (76) by the reversed detent torque is finished.

2. The shift-by-wire system (40) according to claim 1, wherein the electronic control unit (30) is configured to finish the backlash elimination in the backlash portion (G) by the reversed rotating electrical machine torque before the backlash elimination on a side corresponding to the counter-turning direction is started in the backlash portion (G) by the reversed detent torque.

3. The shift-by-wire system (40) according to claim 1 or 2, wherein the electronic control unit (30) is configured to reverse the rotating electrical machine torque immediately after the detent torque is reversed from the torque in the counter-turning direction to the torque in the turning direction.

4. The shift-by-wire system (40) according to any one of claims 1 to 3, wherein the electronic control unit (30) is configured to reverse the rotating electrical machine torque based on a turning angle of the detent plate (46).

5. The shift-by-wire system (40) according to claim 4, wherein the electronic control unit (30) is configured to estimate the turning angle of the detent plate (46) from a rotation angle of the rotating electrical machine (32).

6. The shift-by-wire system (40) according to any one of claims 1 to 5, wherein the electronic control unit (30) is configured to reduce the rotating electrical machine torque immediately before the backlash elimination on a side corresponding to the counter-turning direction is finished in the gear device (76) within a period in which the backlash elimination is executed.

7. The shift-by-wire system (40) according to any one of claims 1 to 6, wherein:

   the electronic control unit (30) is configured to estimate the detent torque based on the rotating electrical machine torque and an angular velocity change rate of the rotating electrical machine (32) during switching control for the shift positions; and
   the electronic control unit (30) is configured to correct a control timing to reverse the rotating electrical machine torque based on the estimated detent torque.

8. The shift-by-wire system (40) according to claim 7, wherein the electronic control unit (30) is configured to correct the control timing after the switching control for the shift positions is finished, in which the detent torque is estimated.

9. The shift-by-wire system (40) according to any one of claims 1 to 8, wherein:

the gear device (76) includes multistage gear pairs (78, 80); and

the backlash portion (G) is in a gear pair located closest to the rotating electrical machine (32) on a power transmission path of the gear device (76), out of the multistage gear pairs (78, 80).

**Patentansprüche**

1. Shift-by-Wire-System (40), das dazu ausgelegt ist, Schaltpositionen umzuschalten, wobei das Shift-by-Wire-System (40) Folgendes umfasst:

eine Rastplatte (46), die um eine Drehachse drehbar ist und eine Mehrzahl von den Schaltpositionen entsprechenden Aussparungen (50, 52) an einer Umfangsfläche der Rastplatte (46) umfasst;

eine Rastfeder (56), die einen Eingriffsabschnitt (58) umfasst, der mit einer beliebigen der Aussparungen (50, 52) der Rastplatte (46) in Eingriff bringbar ist, und dazu ausgelegt ist, den Eingriffsabschnitt (58) hin zu der Umfangsfläche der Rastplatte (46) zu drücken, um die Rastplatte (46) an einer Drehposition zu halten, in der der Eingriffsabschnitt (58) auf eine beliebige der Aussparungen (50, 52) drückt;

eine rotierende elektrische Maschine (32);

eine Zahnradvorrichtung (76), die dazu ausgelegt ist, eine rotierende elektrische Maschinendrehmomentausgabe von der rotierenden elektrischen Maschine (32) auf die Rastplatte (46) zu übertragen; und

eine elektronische Steuereinheit (30), die dazu ausgelegt ist, das rotierende elektrische Maschinendrehmoment zu steuern,

wobei die elektronische Steuereinheit (30) dazu ausgelegt ist, das rotierende elektrische Maschinendrehmoment umzukehren, nachdem die elektronische Steuereinheit (30) die rotierende elektrische Maschine (32) veranlasst, das rotierende elektrische Maschinendrehmoment zum Drehen der Rastplatte (46) in einer Drehrichtung auszugeben, um die Schaltposition umzuschalten, wobei dann das in der Rastplatte (46) durch ein Drücken des Eingriffsabschnitts (58) erzeugte Rastdrehmoment in der Drehrichtung von einem Drehmoment in einer Gegendrehrichtung zu einem Drehmoment in der Drehrichtung, das zu dem Drehmoment in der Gegendrehrichtung entgegengesetzt ist, umgekehrt wird, und bevor eine Totgangeliminierung auf einer Seite, die der Gegendrehrichtung entspricht, in einem Totgangabschnitt der Zahnradvorrichtung (76) durch das umgekehrte Rastdrehmoment abgeschlossen ist.

2. Shift-by-Wire-System (40) nach Anspruch 1, wobei die elektronische Steuereinheit (30) dazu ausgelegt ist, die Totgangeliminierung in dem Totgangabschnitt (G) durch das umgekehrte rotierende elektrische Maschinendrehmoment abzuschließen, bevor die Totgangeliminierung auf einer Seite, die der Gegendrehrichtung entspricht, in dem Totgangabschnitt (G) durch das umgekehrte Rastdrehmoment gestartet wird.

3. Shift-by-Wire-System (40) nach Anspruch 1 oder 2, wobei die elektronische Steuereinheit (30) dazu ausgelegt ist, das rotierende elektrische Maschinendrehmoment umzukehren, unmittelbar nachdem das Rastdrehmoment von dem Drehmoment in der Gegendrehrichtung zu dem Drehmoment in der Drehrichtung umgekehrt wird.

4. Shift-by-Wire-System (40) nach einem der Ansprüche 1 bis 3, wobei die elektronische Steuereinheit (30) dazu ausgelegt ist, das rotierende elektrische Maschinendrehmoment basierend auf einem Drehwinkel der Rastplatte (46) umzukehren.

5. Shift-by-Wire-System (40) nach Anspruch 4, wobei die elektronische Steuereinheit (30) dazu ausgelegt ist, den Drehwinkel der Rastplatte (46) aus einem Rotationswinkel der rotierenden elektrischen Maschine (32) zu schätzen.

6. Shift-by-Wire-System (40) nach einem der Ansprüche 1 bis 5, wobei die elektronische Steuereinheit (30) dazu ausgelegt ist, das rotierende elektrische Maschinendrehmoment, unmittelbar bevor die Totgangeliminierung auf einer Seite, die der Gegendrehrichtung entspricht, in der Zahnradvorrichtung (76) abgeschlossen ist, innerhalb eines Zeitraums, in dem die Totgangeliminierung ausgeführt wird, zu reduzieren.

7. Shift-by-Wire-System (40) nach einem der Ansprüche 1 bis 6, wobei:

die elektronische Steuereinheit (30) dazu ausgelegt ist, das Rastdrehmoment basierend auf dem rotierenden elektrischen Maschinendrehmoment und einer Winkelgeschwindigkeitsänderungsrate der rotierenden elektrischen Maschine (32) während einer Umschaltungssteuerung für die Schaltpositionen zu schätzen; und

die elektronische Steuereinheit (30) dazu ausgelegt ist, eine Steuerzeit zum Umkehren des rotierenden elektrischen Maschinendrehmoments basierend auf dem geschätzten Rastdrehmoment zu korrigieren.

**8.** Shift-by-Wire-System (40) nach Anspruch 7, wobei die elektronische Steuereinheit (30) dazu ausgelegt ist, die Steuerzeit zu korrigieren, nachdem die Umschaltungssteuerung für die Schaltpositionen, in der das Rastdrehmoment geschätzt wird, abgeschlossen ist.

**9.** Shift-by-Wire-System (40) nach einem der Ansprüche 1 bis 8, wobei:

die Zahnradvorrichtung (76) mehrstufige Zahnradpaare (78, 80) umfasst; und
der Totgangabschnitt (G) ein Zahnradpaar aus den mehrstufigen Zahnradpaaren (78, 80) ist, das sich auf einem Leistungsübertragungsweg der Zahnradvorrichtung (76) am nächsten zu der rotierenden elektrischen Maschine (32) befindet.

**Revendications**

**1.** Système à commande électrique (40) conçu pour changer des positions de vitesses, le système à commande électrique (40) comprenant :

une plaque crantée (46) pouvant tourner autour d'un axe de rotation, et comprenant une pluralité d'évidements (50, 52) correspondant aux positions de vitesses sur une surface périphérique de la plaque crantée (46) ;
un ressort à détente (56) comprenant une partie de prise (58) pouvant venir en prise avec l'un quelconque des évidements (50, 52) de la plaque crantée (46), et conçu pour pousser la partie de prise (58) vers la surface périphérique de la plaque crantée (46) pour retenir la plaque crantée (46) à une position de rotation où la partie de prise (58) pousse l'un quelconque des évidements (50, 52) ;
une machine électrique rotative (32) ;
un dispositif à engrenage (76) conçu pour transmettre une sortie de couple de machine électrique rotative depuis la machine électrique rotative (32) à la plaque crantée (46) ; et
une unité de commande électronique (30) conçue pour commander le couple de machine électrique rotative,
dans lequel l'unité de commande électronique (30) est conçue pour inverser le couple de machine électrique rotative après que l'unité de commande électronique (30) amène la machine électrique rotative (32) à émettre en sortie le couple de machine électrique rotative pour tourner la plaque crantée (46) dans une direction de rotation pour changer la position de la vitesse, puis le couple de détente généré dans la plaque crantée (46) par une poussée de la partie de prise (58) est inversé dans la direction de rotation d'un couple dans une direction contraire à la rotation à un couple dans la direction de rotation qui est opposée à la direction contraire à la rotation de couple, et avant que l'élimination du jeu entre dents sur un côté correspondant à la direction contraire à la rotation dans une partie de jeu entre dents du dispositif à engrenage (76) par le couple de détente inversé soit terminée.

**2.** Système à commande électrique (40) selon la revendication 1, dans lequel l'unité de commande électronique (30) est conçue pour terminer l'élimination du jeu entre dents dans la partie de jeu entre dents (G) au moyen du couple de machine électrique rotative inversé avant que l'élimination sur un côté correspondant à la direction contraire à la rotation soit démarrée dans la partie de jeu entre dents (G) au moyen du couple de détente inversé.

**3.** Système à commande électrique (40) selon la revendication 1 ou 2, dans lequel l'unité de commande électronique (30) est conçue pour inverser le couple de machine électrique rotative immédiatement après que le couple de détente est inversé du couple dans la direction contraire à la rotation au couple dans la direction de rotation.

**4.** Système à commande électrique (40) selon l'une quelconque des revendications 1 à 3, dans lequel l'unité de commande électronique (30) est conçue pour inverser le couple de machine électrique rotative sur la base d'un angle de rotation de la plaque crantée (46).

**5.** Système à commande électrique (40) selon la revendication 4, dans lequel l'unité de commande électronique (30) est conçue pour estimer l'angle de rotation de la plaque crantée (46) à partir d'un angle de rotation de la machine électrique rotative (32).

**6.** Système à commande électrique (40) selon l'une quelconque des revendications 1 à 5, dans lequel l'unité de commande électronique (30) est conçue pour réduire le couple de machine électrique rotative immédiatement avant que l'élimination du jeu entre dents sur un côté correspondant à la direction contraire à la rotation soit terminée dans le dispositif à engrenage (76) pendant une période pendant laquelle l'élimination du jeu entre dents est exécutée.

**7.** Système à commande électrique (40) selon l'une quelconque des revendications 1 à 6, dans lequel :

l'unité de commande électronique (30) est conçue pour estimer le couple de détente sur la base du couple de machine électrique rotative et d'une vitesse de changement de vitesse angulaire de la machine électrique rotative (32) pendant la commande de changement des positions de vitesses ; et

l'unité de commande électronique (30) est conçue pour corriger une synchronisation de commande pour inverser le couple de machine électrique rotative sur la base du couple de détente estimé.

8. Système à commande électrique (40) selon la revendication 7, dans lequel l'unité de commande électronique (30) est conçue pour corriger la synchronisation de commande après que la commande de changement des positions de vitesses est terminée, pendant laquelle le couple de détente est estimé.

9. Système à commande électrique (40) selon l'une quelconque des revendications 1 à 8, dans lequel :

le dispositif à engrenage (76) comprend des paires d'engrenages à étages multiples (78, 80) ; et la partie de jeu entre dents (G) se trouve dans une paire d'engrenages la plus proche de la machine électrique rotative (32) sur un chemin de transmission de puissance du dispositif à engrenage (76), hors des paires d'engrenages à étages multiples (78, 80).

# FIG. 1

# FIG. 2

EP 3 995 722 B1

# FIG. 3

FIG. 4

# FIG. 5

# FIG. 6A

# FIG. 6B

# FIG. 7

START

S10

OUTPUT DRIVE TORQUE IN TURNING
DIRECTION FROM MOTOR

S20

IS MOTOR ROTATION ANGLE $\theta$m
PREDETERMINED
FIRST ROTATION ANGLE $\theta$m1(= $\theta$mmt)?

NO

YES

S30

OUTPUT DRIVE TORQUE IN COUNTER-
TURNING DIRECTION FROM MOTOR

S40

BRING FIRST LIMITER INTO
OPERATING STATE

S50

IS MOTOR ROTATION ANGLE $\theta$m
PREDETERMINED
SECOND ROTATION ANGLE $\theta$m2(< $\theta$m1)?

NO

YES

S60

BRING FIRST LIMITER INTO
NON-OPERATING STATE

END

# FIG. 8A

MOTOR ROTATION ANGLE $\theta_m$ [rad]

DETENT TURNING ANGLE $\theta_d$ [rad]

(+) $\theta_{mnp}$
$\theta_{m1}$
($\theta_{mmt}$)

$\theta_{m2}$
$\theta_{mp}$
0

$\theta_d$
$\theta_m$

(+) $\theta_{dnp}$

$\theta_{dmt}$

$\theta_{dp}$
0

# FIG. 8B

MOTOR TORQUE $T_m$ [Nm]

DETENT TORQUE $T_d$ [Nm]

(-)

$T_d$

0

$T_m$

(-)

0

# FIG. 8C

MOTOR ANGULAR VELOCITY COMMAND VALUE $\omega_{mtgt}$ [rad/sec]
MOTOR ANGULAR VELOCITY $\omega_m$ [rad/sec]

0

FIRST LIMITER OPERATING PERIOD

$\omega_{mlmt1}$

$\omega_{mtgt}$

$\omega_m$

(-)

# FIG. 8D

BACKLASH PORTION PHASE DIFFERENCE [rad]

(+)

0

$\theta_{g3}$

$\theta_{g2}$

$\theta_{g1}$

# FIG. 8E

RELATIVE ANGULAR VELOCITY [rad/sec]

(+)

0

$\Delta\omega_{g1}$

0

$\Delta\omega_{g2}$

0

$\Delta\omega_{g3}$

t1 t2 t3 t4    t5 ta tb t6 t7 tc    t8    TIME t [sec]

28

FIG. 9A

FIG. 9B

FIG. 9C

FIG. 9D

FIG. 9E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018080807 A
- US 2017307072 A1
- US 10680541 B2
- JP 2004190839 A
- WO 2020080544 A1